Europäisches Patentamt

European Patent Office

Office européen des brevets

(19)

(11) **EP 1 102 949 B1**

(12) **EUROPÄISCHE PATENTSCHRIFT**

(45) Veröffentlichungstag und Bekanntmachung des Hinweises auf die Patenterteilung:
**09.10.2002 Patentblatt 2002/41**

(21) Anmeldenummer: **99947264.0**

(22) Anmeldetag: **29.07.1999**

(51) Int Cl.$^7$: **F23C 11/00**

(86) Internationale Anmeldenummer:
**PCT/EP99/05429**

(87) Internationale Veröffentlichungsnummer:
**WO 00/006948 (10.02.2000 Gazette 2000/06)**

(54) **VERFAHREN ZUR VERWERTUNG EINES BRENNSTOFFS UNTER NUTZUNG EXOTHERMER VORREAKTIONEN IN FORM EINER KALTEN FLAMME**

METHOD FOR UTILIZING A FUEL BY USING EXOTHERMIC PRE-REACTIONS IN THE FORM OF A COLD FLAME

PROCEDE DE VALORISATION D'UN COMBUSTIBLE PAR RECOURS A DES PREREACTIONS EXOTHERMIQUES SOUS FORME DE FLAMME FROIDE

(84) Benannte Vertragsstaaten:
**AT BE CH CY DE DK ES FI FR GB GR IE IT LI LU MC NL PT SE**

(30) Priorität: **29.07.1998 DE 19834051**
**21.12.1998 DE 19860308**
**14.06.1999 DE 19927045**

(43) Veröffentlichungstag der Anmeldung:
**30.05.2001 Patentblatt 2001/22**

(73) Patentinhaber: **Köhne, Heinrich**
**52072 Aachen (DE)**

(72) Erfinder:
• **KÖHNE, Heinrich**
**D-52072 Aachen (DE)**
• **LUCKA, Klaus**
**D-52072 Aachen (DE)**
• **RUDOLPHI, Ingo**
**D-52224 Aachen (DE)**
• **GITZINGER, Heinz-Peter**
**D-52072 Aachen (DE)**
• **HARTMANN, Lutz**
**D-51643 Gummersbach (DE)**

(74) Vertreter:
**Meyers, Hans-Wilhelm, Dr.Dipl.-Chem. et al**
**Patentanwälte**
**von Kreisler-Selting-Werner**
**Postfach 10 22 41**
**50462 Köln (DE)**

(56) Entgegenhaltungen:
**DE-A- 19 618 121       FR-A- 2 369 914**
**US-A- 4 002 151        US-A- 4 264 435**

## Beschreibung

Gegenstand der vorliegenden Erfindung ist ein Verfahren zur Verwertung eines Brennstoffes, ein Produkt erhältlich gemäß dem erfindungsgemäßen Verfahren, Verwendung des Produktes sowie eine Vorrichtung zur Erzeugung eines Gemisches zur Verwendung im erfindungsgemäßen Verfahren.

Moderne und schadstoffarme Verfahren zur Verbrennung gasförmiger, flüssiger und fester Brennstoffe haben ein gemeinsames Konstruktionsmerkmal: Eine technisch ausgeklügelte Gemischaufbereitung. Die Gemischbildung stellt ein entscheidendes Kriterium für die Qualität der Verbrennung dar. Inhomogenitäten - gleich welcher Art z.B. Verteilung des Brennstoffs/Oxidators in einer Verbrennungskammer - führen im Allgemeinen zur Bildung von Schadstoffen. Bei lokal sauerstoffarmer Mischung können unverbrannte Kohlenwasserstoffe und Ruß in Folge einer unvollständigen Verbrennung auftreten.

Diese Erkenntnisse führten bereits in der Vergangenheit zur Entwicklung von vormischenden Verbrennungssystemen. Bei gasförmigen Brennstoffen ist die Gemischbildung mit Sauerstoff oder Luft weniger aufwendig. Deshalb konnten hier bereits früh Verbesserungen erreicht werden.

Die Gemischbildung von Luft und flüssigen Brennstoffen ist in der technischen Umsetzung aufwendiger als bei gasförmigen Brennstoffen. Es gibt verschiedene Ansätze, ein homogenes Gemisch zu erzeugen. Die Systeme arbeiten mit einer Zerstäubung der Flüssigkeit und/oder einer thermischen Aufbereitung, die zur teilweisen oder vollständigen Verdampfung in Luft oder Abgas führt.

Bei Mitteldestillaten führen Konzepte zur Verdampfung von Flüssigkeitsfilmen, die zum Beispiel an heißen Oberflächen herablaufen, über längere Zeit zu dem Problem der Bildung von Ablagerungen an den Oberflächen des Verdampfers. Dies wurde in verschiedenen Arbeiten unter anderem von Brand et al. (1981), Kostka et al. (1982) und Mallog et al. (1983) beschrieben. Die Ablagerungen sind Reaktionsprodukte aus Crackreaktionen, die bei Temperaturen oberhalb von 400 °C auftreten. Solch hohe Temperaturen bis oberhalb des Siedeendes des Mitteldestillats (380 °C bis 400 °C) sind aber für einen ausreichenden Wärmeübergang von der Verdampferwand an das flüssige Medium erforderlich. Die Ablagerungen führen zu einer Verschlechterung des Wärmeübergangs und damit zur Störanfälligkeit des Systems. Zur Vermeidung der Bildung von Ablagerungen muß der Kontakt des flüssigen Brennstoffs mit heißen Wänden vermieden werden.

Neuartige Brennerkonzepte für flüssige Brennstoffe, wie Oberflächenbrenner, stellen sehr hohe Anforderungen an die Gemischbildung von Brennstoff und Luft. Neben den Konzepten zur homogenen Gemischbildung gibt es auch Vormischkonzepte, die eine quasi-homogene Brennstoff-Luft-Gemischaufbereitung realisieren. Bei dem Oberflächenbrenner aus der Offenlegungsschrift DE 196 06 560 wird der Brennstoff unter Druck auf 100 °C bis 800°C erhitzt und in einen Mischraum eingespritzt. Durch die große Druckabsenkung am Ventilaustritt werden im Vergleich zur herkömmlichen Druckzerstäubung sehr kleine kolloiddisperse Tropfen erzeugt, die aufgrund der aggregationshemmenden Mechanismen eine gewisse Stabilität besitzen. Bei dem Aerosolbrenner von Schilling (1997) wird ein Ölnebel erzeugt, in dem eine mit Öl benetzte Sintermetallschicht mit erwärmter Luft durchströmt wird. In der Offenlegungsschrift DE 196 25 217 wird der flüssige Brennstoff mit einer herkömmlichen Druckzerstäubung in den erwärmten Luftstrom eingedüst und verdampft. Je nach Wahl der Prozeßparameter (Temperatur, Luftmenge, Rauchgasmenge) kann eine partielle chemische Umsetzung des Öls erreicht werden.

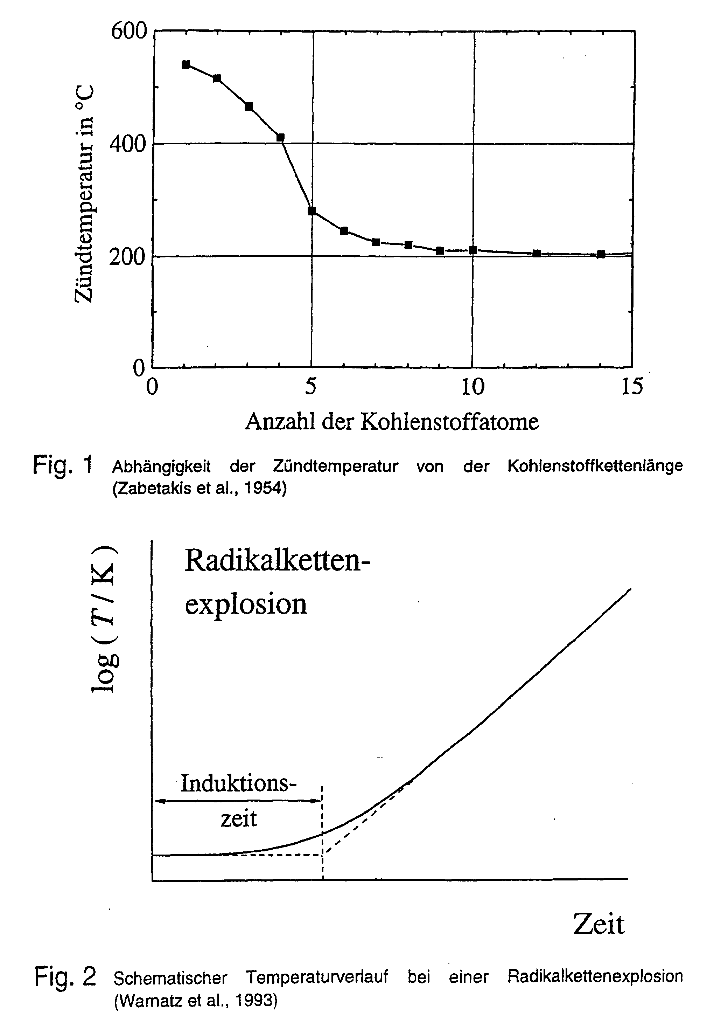

Für die direkte Verdampfung kann der Brennstoff auch in einen vorgewärmten Luftstrom eingebracht und dort bei weiterer Wärmezufuhr vollständig verdampft werden. Die dazu notwendigen Temperaturen führen theoretisch jedoch zur Selbstentzündung des Gemisches. Bei der Gemischbildung von Gasen, wie zum Beispiel Methan (Erdgas), besteht diese Gefahr weit weniger (Figur 1).

Ferner besteht die Möglichkeit, den Brennstoff zunächst mit Wasserdampf zu verdampfen und anschließend mit der Verbrennungsluft zu vermischen (Stoffel et al, 1995).

Die Zündung von Kohlenwasserstoffen verläuft - anders als bei rein thermischen Zündungen - über die Bildung reaktiver Radikale, die das System zur Zündung veranlassen (Warnatz et al., 1993). Die Bildung dieser Radikale verläuft über chemische Kettenverzweigungsreaktionen und dauert eine gewisse Zeit. Während dieser sogenannten Induktionszeit, findet zwar ein chemischer Umsatz statt, die Temperatur der Mischung bleibt jedoch weitgehend konstant (Figur 2).

Für die thermische Betrachtung eines Systems stellt die beschriebene Induktionszeit also eine Zündverzugszeit dar. Diese ist von der Temperatur und vom Druck des Gemisches abhängig. Untersuchungsergebnisse liegen bisher vor allem bei Randbedingungen aus dem Bereich der Gasturbinen und der motorischen Verbrennung, also bei erhöhten Drücken und hohen Temperaturen, vor. Die Bestimmung der Zündverzugszeit ist stark von den Versuchsbedingungen, insbesondere der Versuchsapparatur, abhängig. Die in der Literatur (Lefebvre, 1982; Pitsch, 1995; Spadaccini, 1982) genannten Werte differieren entsprechend. Lefebvre hat für die Bestimmung der Zündverzugszeiten einen Rohrreaktor verwendet, bei dem die Brennstoffeindüsung in einem beheizten Luftstrom erfolgt und die Zündverzugszeit gleich der Induktionszeit bis zum Reaktionsbeginn (Fig. 2) ist. Bei der motorischen Verbrennung kann durch Selbstzündungen - zeitversetzt durch den Zündverzug - das Motorklopfen ausgelöst werden. Bei Gasturbinen wird der Einsatz der Vormischverbrennung zur Stickoxidreduzierung durch die Selbstzündung der Gemische bei hohen Drücken erschwert. Hier steht für die Gemischbildung nur die Zeit des Zündverzugs zur Verfügung, die bei hohen Drücken im Bereich einiger Millisekunden liegt.

Der Anstieg der Temperatur eines Gemisches bei der direkten Brennstoffzugabe in einen vorgeheizten Luftstrom kann mit exothermen Reaktionen der Kohlenwasserstoffe mit dem Luftsauerstoff erklärt werden. Diese führen zu einer Zündung des Gemisches. In der Literatur werden gleiche Effekte mit "Kalten Flammen" beschrieben (Coffee et al., 1979; Affens et al., 1979). Coffee hat das Phänomen der Kalten Flammen bei Untersuchungen zum zu vermeidenden Motorenklopfen entdeckt. Kalte Flammen führen unter motorischen Reaktionsbedingungen (Verweilzeit, Druck und Temperatur) aber immer zur Selbstzündung des Gemischs. Affens beschreibt die Kalten Flammen unter atmosphärischen Bedingungen, als einen unter sicherheitstechnisch relevanten Gesichtspunkten negativen Effekt.

Bei der Verwertung von organischen Abfällen beschreibt Lucquin et al. in der Patentschrift FR-A-2 269 914 vom 2. Juni 1978 ähnliche Phänomene, die als kalte Verbrennung bezeichnet werden. Durch Zugabe von vorgewärmter, mit Sauerstoff angereicherter Luft erfolgt eine Niedertemperaturverbrennung der zu Makromolekülen verarbeiteten Feststoffe, die im Besonderen aus polymerischen Abfällen bestehen.

Für ein n-Heptan-Gemisch führen die Reaktionen der Kalten Flamme im Reaktionsrohr zu einem Anstieg der Temperatur und zu einer Stabilisierung auf dem erhöhten Niveau (Freytag, 1965). Hierbei wird die Reaktion durch ein fahles bläuliches Leuchten charakterisiert. Die Limitierung der stattfindenden chemischen Reaktionen beruht auf komplexen brennstoffspezifischen Mechanismen. Warnatz beschreibt ein Modell zur Erklärung der Limitierung bei einem bestimmten Temperaturniveau, ähnlich dem Phänomen der Kalten Flammen. Bei der Niedertemperatur-Oxidation (800 K - 900 K) ist die Gleichgewichtsreaktion von Kohlenwasserstoffradikalen mit Sauerstoff zu Peroxiradikalen entscheidend.

$$R\bullet + O_2 \rightleftarrows RO_2\bullet \qquad \text{(erste } O_2\text{-Addition)}$$

An diese Reaktion schließen sich weitere Reaktionen zur Kettenfortpflanzung und Kettenverzweigung an. Der Schlüssel für die Entstehung der Kalten Flammen liegt in der mangelnden thermischen Stabilität der durch die Sauerstoffaddition gebildeten Vorläufer der Kettenreaktionen. Bei höheren Temperaturen verschiebt sich das chemische Gleichgewicht wieder auf die Seite der Kohlenwasserstoffradikale. Damit zerfallen die Peroxiradikale und eine Zündung wird verhindert.

Das der Erfindung zugrunde liegende technische Problem besteht darin, die angesprochenen Nachteile im Stand der Technik zu überwinden. Im Wesentlichen wird hierunter die Gemischbildung von flüssigem Brennstoff und Oxidator verstanden. Üblicherweise ist die Gemischbildung durch die Überlagerung der Effekte der Vermischung, der Verdampfung und der Hochtemperaturoxidation geprägt, die sich nur begrenzt durch die Zündverzugszeit zeitlich und räumlich trennen lassen. Bei dem erfindungsgemäßen Verfahren wird die Kalte Flamme außerdem gezielt zur positiven Beeinflussung von Stoffeigenschaften genutzt.

Gelöst wird das technische Problem durch ein Verfahren zur Verwertung eines Brennstoffes, der eine Ausgangssiedetemperatur oder überwiegend einen Ausgangssiedetemperaturbereich bei 1 bar zwischen 231 K und 830 K aufweist, welches durch die Merkmale des Anspruchs 1 gekennzeichnet ist.

Unter den Zustandsparametern werden insbesondere der Gesamtdruck, die Partialdrücke der Edukte, insbesondere von Oxidator und Brennstoff, sowie die Anfangstemperaturen der Edukte verstanden. Die Prozeßparameter umfassen die geometrischen Daten der Apparatur, die Aufenthaltszeit, die über die Apparatur einoder ausgekoppelten Wandwärmeströme, sowie das Rezirkulationsverhältnis vom rezirkulierten Produktstrom in die Reaktionszone zum eingesetzten Eduktstrom.

Vorzugsweise ist die Verweilzeit $t_v$ bei $p \leq 1$ bar größer als 500 ms.

Die Verweilzeit beschreibt diejenige Zeit, die das bei der Kalten Flamme enstandene Gemisch im jeweiligen Reaktionsraum verharrt. Die Verweilzeit wird durch Division von Reaktorvolumen $V$ durch Volumenstrom des Gemisches $\dot{V}$ zu $t_v = V/\dot{V}$ bestimmt. Durch das erfindungsgemäße Verfahren kann die Verweilzeit des Gemisches im Reaktionsraum länger sein als die nach der Methode von Lefebvre ermittelte Zündverzugszeit.

Das erfindungsgemäße Verfahren nutzt das Phänomen der Kalten Flamme. Während bisher die Kalte Flamme im Stand der Technik als ein Nachteil beschrieben wird, der zu vermeiden ist, wird nunmehr im erfindungsgemäßen Verfahren das Phänomen gezielt genutzt.

Durch das erfindungsgemäße Verfahren können wichtige, derzeit ausschließlich auf der Basis von Gasen (v.a. Erdgas) betreibbare Prozeße auf den Einsatz von flüssigen Brennstoffen erweitert werden. Durch das erfindungsgemäße Verfahren wird also beispielsweise bei Verwendung von Heizöl EL die flüssige Brennstoffphase in eine gasförmige Phase konvertiert. Der Einsatz eines homogenen BrenngasLuftgemisches ermöglicht beispielsweise im Gegensatz zu herkömmlichen Ölbrennern, daß die Schadstoff- und Geräuschemissionen aus der Verbrennung deutlich gesenkt sowie kompaktere Kesselsysteme eingesetzt werden können.

Es handelt sich bei den Kalten Flammen um exotherme Reaktionen des insbesondere flüssigen Brennstoffes bei Anwesenheit eines Oxidators, die zu einer spontanen Temperaturerhöhung von bis zu 180 K führen. Prinzipiell finden neben den exothermen Reaktionen auch endotherme Reaktionen statt. In jedem Fall ist die Bruttoreaktion exotherm. Ähnliche Temperaturerhöhungen können auch durch partielle Oxidation des Brennstoffes erreicht werden, in dem die Luftmenge entsprechend reduziert wird. Der Unterschied zur Kalten Flammen Reaktion besteht unter anderem darin, daß bei der Kalten Flamme nur ein Teilumsatz des Oxidators und Brennstoffs erfolgt. Bei der partiellen Oxidation wird der zugeführte Brennstoff nur partiell umgesetzt, da nur eine begrenzte Menge des Oxidator vorhanden ist. Im Gegensatz zur Kalten Flamme wird der zugeführte Oxidator in der Reaktion vollständig verbraucht.

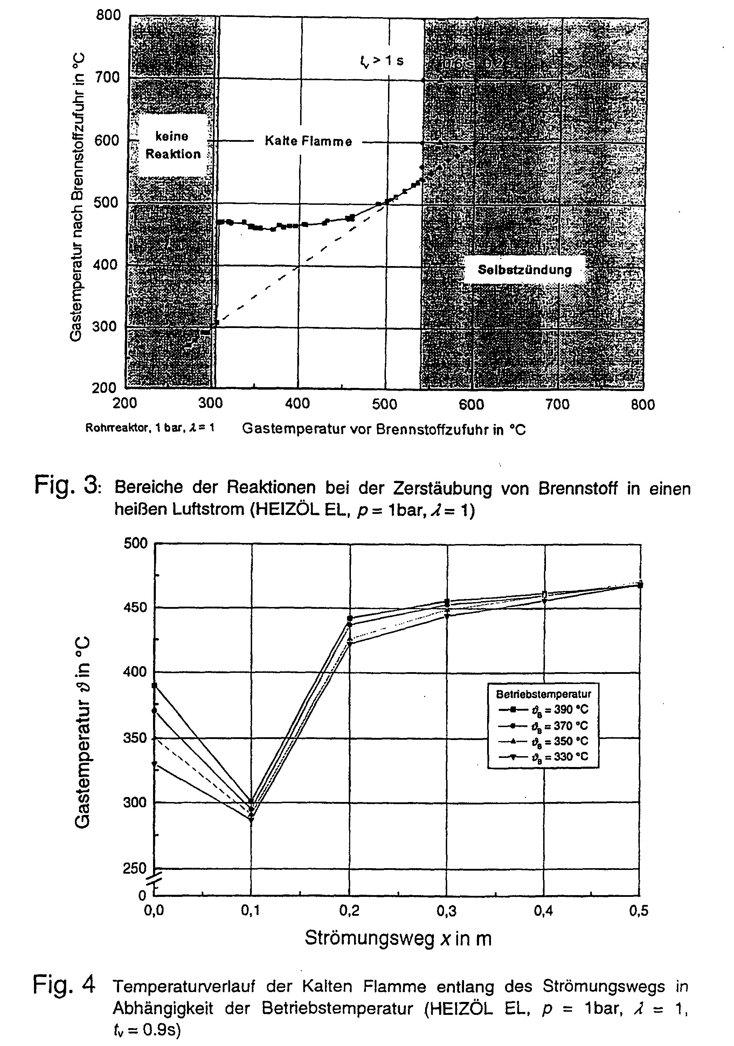

Wird beispielsweise Heizöl EL als Brennstoff eingesetzt, bildet die Kalte Flamme ein Gemisch aus Ketonen, Aldehyden und anderen Verbindungen. Zum erstmaligen Einleiten der chemischen Reaktionen der Kalten Flamme ist eine definierte Temperatur oder -bereich des Oxidators erforderlich. Diese Temperatur wird als Initiierungstemperatur festgelegt. Einstelldaten der Initiierungstemperatur für Heizöl EL gehen aus Fig. 3 hervor. Nach Initiierung der Kalten Flamme definiert man hingegen die Betriebstemperatur. Unter der Betriebstemperatur wird diejenige Temperatur verstanden, die einen stabilen Betrieb der Kalten Flamme gewährleistet. In der Praxis ist der Bereich zwischen minimaler und maximaler Temperatur zum Betrieb der Kalten Flamme größer als für deren Initiierung.

Die Temperaturerhöhung setzt zum Beispiel bei Heizöl EL für ein Luftverhältnis von $\lambda = 0,7$ bis 2,0 und atmosphärischem Druck bei einer Initiierungstemperatur von etwa 310 °C ein. Als Brennstoffe kommen im wesentlichen Kohlenwasserstoffe, Gemische von Kohlenwasserstoffen mit nicht Kohlenwasserstoffen, in Form von Emulsionen und/oder Suspensionen mit in Kohlenwasserstoff im wesentlichen unlöslichen Flüssigkeiten, insbesondere Wasser im Gemisch mit Ammoniak, Schwefelwasserstoff und/oder Alkanolen, insbesondere $C_1$ - $C_4$-Alkanolen in Frage.

Der Oxidator ist eine Substanz oder ein Substanzgemisch, das gegenüber dem insbesondere flüssigen Brennstoff ein höheres chemisches Oxidationspotential besitzt. Vorzugsweise werden Sauerstoff, Ozon, Luft, Abgase aus überstöchiometrischer Verbrennung, eine Sauerstoff enthaltende Verbindung, wie Peroxide enthaltende Verbindung, Schwefeloxide, Stickoxide ($N_yO$ oder $NO_x$) oder Gemische davon eingesetzt.

Bei der Brennstoffzugabe in einen unter atmosphärischem Druck zugeführten Luftstrom treten bei Temperaturen über 310°C exotherme Vorreaktionen zwischen Brennstoff, wie Heizöl EL, n-Heptan, RME oder Iso-Oktan, und Oxidator, vorzugsweise Luft, auf. In Fig. 3 sind die Ergebnisse eigener Versuche, bei denen Heizöl EL als Brennstoff am Anfang des Strömungsweges in einen Heißluftstrom gemischt wird, dargestellt. Unterhalb einer Grenztemperatur von 310 °C ließ sich keine Temperaturerhöhung messen. Dies bedeutet, daß bei diesen Temperaturen keine oder nur in einem geringen Maße Reaktionen ablaufen. Ab einer Lufttemperatur von 310 °C trat eine Erhöhung der Temperatur auf etwa 480 °C ein.

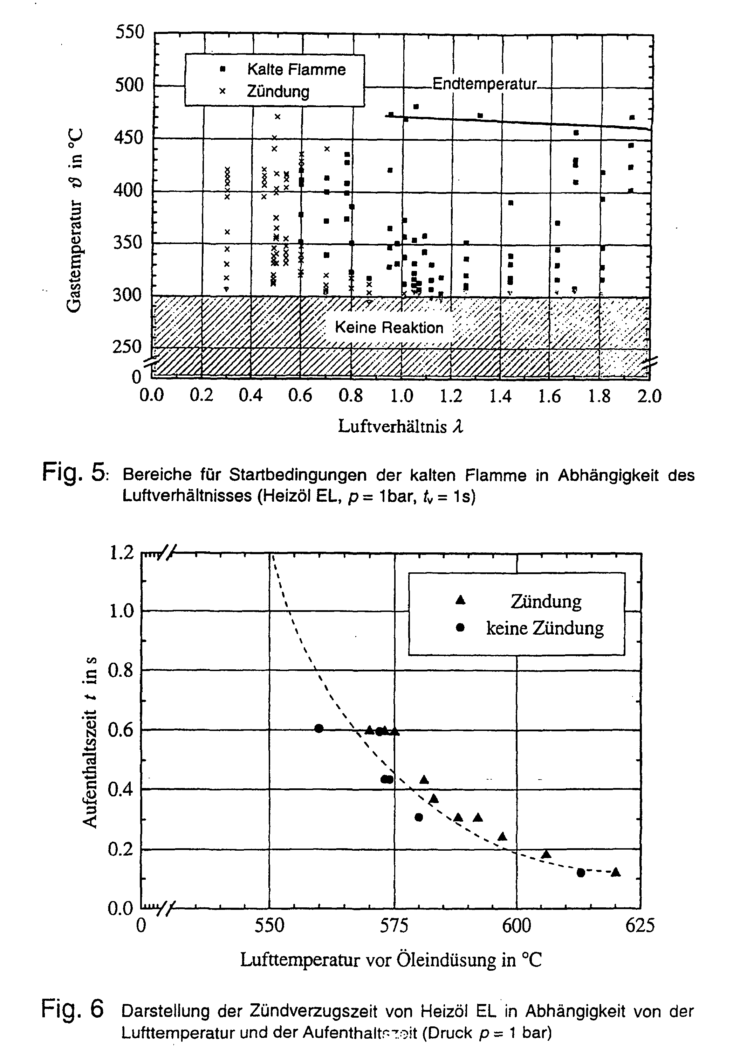

Für Heizöl EL-Luft-Mischungen stellt die Temperatur von 480 °C offenbar einen Grenzwert dar, denn der weitere Anstieg der Lufttemperatur vor der Brennstoffzerstäubung erhöhte die Gemischtemperatur nicht. Diese Temperatur kann damit als Gleichgewichtstemperatur für die beschriebene Oxidationsreaktion der Kalten Flammen gelten. Bei einer Lufttemperatur oberhalb von 480 °C ist der Temperaturanstieg des Gemisches nur noch sehr gering. Exotherme Reaktionen in Form der Kalten Flammen scheinen unter den gewählten Randbedingungen nicht mehr abzulaufen. Wird die Lufttemperatur über 540 °C erhöht, so beginnt für das Gemisch der Bereich der Selbstzündung, der dem Zündverzug unterworfen ist (siehe auch Fig. 6).

Der Temperaturverlauf der Kalten Flamme entlang des Strömungswegs in Abhängigkeit der Starttemperatur ist in Fig. 4 wiedergegeben. Wie bereits aus Fig. 3 ersichtlich, ist die Endtemperatur der Kalten Flamme weitgehend unabhängig von der Starttemperatur. Der anfängliche Temperaturabfall vor Beginn der Kalten Flamme resultiert aus der Verdampfungsenthalpie des flüssigen Brennstoffes.

Bei der Gemischbildung flüssiger Brennstoffe überlagern sich Effekte der Verdampfung und der Mischung mit dem Oxidator. Zur genauen Bestimmung der einzelnen Effekte ist sowohl die Einspritzung des flüssigen Brennstoffs in den Luftstrom als auch die Zugabe von vorverdampftem Brennstoff untersucht worden. Hierbei zeigte sich, daß die Endtemperaturen der Kalten Flammen unabhängig von der Art der Brennstoffzugabe ähnliche Werte erreichen.

Im Hinblick auf den Betrieb von Verbrennungssystemen ist der Einfluß des Luftverhältnisses auf das erfindungsgemäße Verfahren von Interesse. Die Erhöhung des Luftverhältnisses führt kaum zu Veränderungen der Endtemperatur des Gemischs nach Brennstoffzufuhr. Ein höheres Luftverhältnis stellt einen vergrößerten Ballastmassenstrom dar, der bei der Temperaturerhöhung durch das erfindungsgemäße Verfahren mehr Wärme aufnimmt. In Fig. 5 sind die sich einstellenden Phänomene in Abhängigkeit von den Startbedingungen dargestellt. Die quadratischen Punkte stellen Einstellungen zu Beginn der Brennstoffzufuhr dar, die zur Ausbildung einer Kalten Flamme führen. Es stellt sich eine Endtemperatur zwischen 470 °C und 480 °C ein.

Im Bereich der Unterstöchiometrie gibt es neben dem Bereich der Ausbildung einer Kalten Flamme auch Bereiche der Starteinstellungen, hier mit Kreuzen dargestellt, die zur Zündung des Gemisches führen. Durch gezielte Maßnahmen der Temperaturregulierung im Bereich der Kalten Flammen, z.B. durch Wärmeabfuhr über die Reaktoraußenwand, lassen sich die Zündungen im Bereich der Unterstöchiometrie vermeiden und ein sicherer Betrieb der Kalten Flammen gewährleisten.

Im Bereich der Temperaturen bis 540 °C konnten keine Zündungen des Gemisches beobachtet werden. Wird dagegen die Temperatur der Luftströmung über 550 °C bis 600 °C erhöht, so entzündet sich das Gemisch. Eine Zündung tritt nicht auf, wenn die Aufenthaltszeit unterhalb der Zündverzugszeit $t_v$ liegt. Die Grenze zwischen den ermittelten Zündbedingungen und den Bedingungen für einen Zündverzug stellt die gesuchte Abhängigkeit der Zündverzugszeit von der Temperatur dar (Fig. 6). Die Ergebnisse zeigen, daß die Zündverzugszeiten von Mitteldestillaten unter atmosphärischen Bedingungen im Bereich von mehreren Zehntelsekunden liegen.

Unterhalb von 550 °C können Zündverzugszeiten von über einer Sekunde erwartet werden. Der Verlauf der Zündverzugszeit läßt eine Grenztemperatur im technisch interessanten Zeitbereich erwarten. Unterhalb dieser Temperatur kann eine Zündung sicher ausgeschlossen werden. Damit wird es möglich, ein homogenes Gemisch aus Brennstoff, Oxidator und Kalte Flamme-Produkten in einer Mischkammer zu erzeugen und sicher zu transportieren.

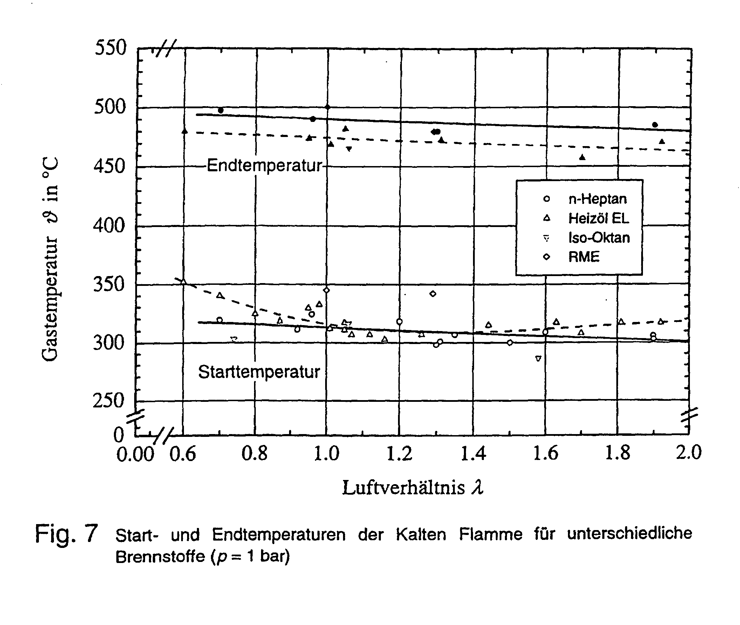

Weiterhin sind Versuche mit unterschiedlichen Brennstoffen durchgeführt worden (Fig. 7). Es zeigte sich, daß die Start- und Endtemperaturen der eingesetzten Brennstoffe nahezu identisch sind. Bis auf die Starttemperatur von RME, die bedingt durch die Siedebereich von 330 °C bis 340 °C erhöht liegt, liegen alle Temperaturen innerhalb eines schmalen Bandes. Es konnte hiermit eine geringe Abhängigkeit der Kalten Flamme vom Siedepunkt oder Siedeverlauf des Kohlenwasserstoffs gezeigt werden. Auch die Bindungsart der Kohlenwasserstoffe hat keinen signifikanten Einfluß.

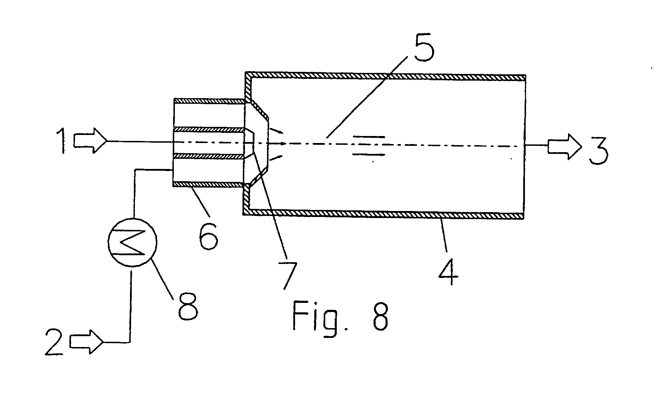

In Fig. 8 ist eine Vorrichtung gezeigt, welche zur Durchführung des erfindungsgemäßen Verfahrens besonders geeignet ist. Mit Hilfe einer solchen Vorrichtung wurden die in Fig. 3 bis 7 gezeigten Daten unter atmosphärischen Druckbedingungen gemessen. Mit 4 ist ein Reaktionsrohr bezeichnet, dem eine Zufuhr- und Mischeinrichtung des Oxidators 6 angegliedert ist. Unter dem hier verwendeten Begriff Oxidator 2 sind im Allgemeinen die Stoffe gemeint, die gegenüber dem Brennstoff 1 ein höheres Oxidationspotential aufweisen. In den gebräuchlichen Anwendungsfällen handelt es sich hierbei um Luft oder molekularen Sauerstoff, aber auch um zurückgeführte Gase aus einer überstöchiometrischen Verbrennung. Es sind jedoch auch andere Gase mit höherem Oxidationspotential gegenüber dem Brennstoff in Betracht zu ziehen, denen durch das erfindungsgemäße Verfahren eine Verwertung widerfahren soll, wie beispielsweise Schwefeloxide.

Der Brennstoff 1 wird der Mischeinrichtung 6 über eine Brennstoffdüse 7 zugeführt. Der hier verwendete Begriff Brennstoff 1 umfasst primär alle kohlenwasserstoffhaltigen Brennstoffe, wie Mitteldestillate oder Ähnliche. Darüber hinaus werden hierunter aber auch Gemische aus Kohlenwasserstoffen mit nicht Kohlenwasserstoffen verstanden. Diese werden getrennt, als Emulsion und/oder Suspension dem Verfahren zugeführt. Die mit nicht Kohlenwasserstoffen bezeichneten Stoffe sollen einerseits zur Verfahrensoptimierung beitragen, hierunter wird insbesondere Wasser verstanden. Andererseits kann eine Beimischung mit nicht Kohlenwasserstoffen sinnvoll sein, um durch das erfindungsgemäße Verfahren eine Verwertung dieser Zusatzstoffe, wie beispielsweise Kohlenstoff, zu erzielen.

Das enstandene Brennstoff-Oxidator-Gemisch strömt ausgehend von der Mischeinrichtung 6 axial durch das Reaktionsrohr 4. Zur Initiierung der exothermen Reaktionen der Kalten Flamme ist eine geeignete Wahl der Zustands- und Prozessparameter erforderlich. Beispielhaft soll das Verfahren für Heizöl EL als Brennstoff 1 und Luft als Oxidator 2 ausgeführt werden. Das Reaktionsrohr besteht im vorliegenden Beispiel aus einem isolierten dünnwandigen Edelstahlrohr mit einer Länge von 1000 mm und einem Durchmesser von 100 mm (siehe Fig. 8). Das Öl wird über ein herkömmliches Druckzerstäubungssystem 7 zugeführt. Die Brennstoffleistung beträgt dabei 10 bis 20 kW. Die Luft wird der Mischeinrichtung 6 unter atmosphärischen Druckbedingungen mit einem Mischdruck von 500 bis 700 Pa zugeführt. Zur Initiierung der Kalten Flamme muss der Luftstrom entsprechend erwärmt werden. Hierzu wird die der Mischeinrichtung zugeführte Luft 2 durch einen Luftvorwärmer auf die Initiierungstemperatur geheizt. Versuche mit dem in Fig. 8 dargestellten adiabaten Kalte Flammen-Generator, bei dem die Wandwärmeverluste durch eine Mantelheizung vermieden werden (ideale Isolation), ergeben einen Vorzugsbereich der Initiierungstemperatur von 310 °C bis 450 °C. Hierbei zeigt sich der Einfluss des eingestellten Luftverhältnisses $\lambda$ als vernachlässigbar. Beispielsweise muß für eine Leistung von 12 kW und $\lambda = 1{,}0$ ein Ölmassenstrom $\dot{M}_b = 1{,}0$ kg/h und ein Luftmassenstrom $\dot{M}_L = 13{,}5$ kg/h eingestellt werden. Die Kalte Flamme kann dabei durch Variation des Ölmassenstroms bei einem Luftverhältnis im Bereich von $\lambda = 0{,}3$ bis $2{,}0$ sicher initiiert werden. Die Kalte Flamme äußert sich im abgedunkelten Raum als fahles bläuliches Leuchten und kann durch Messung eines limitierten Temperaturanstiegs auf etwa 480 °C nachgewiesen werden. Das Kalte Flammen Produkt ist ein durch Fremdzündung entzündbares Gemisch.

Der hier verwendete Begriff Luftverhältnis $\lambda$ beschreibt das Verhältnis der zugeführten Sauerstoffmenge zu der für einen vollständigen Umsatz des eingesetzten Brennstoffes erforderlichen Mindestsauerstoffmenge.

Die exothermen Reaktionen der Kalten Flammen rufen in der Reaktionszone 5 einen spontanen Temperaturanstieg hervor, der auf einen Teilumsatz des Brennstoffes zurück zu führen ist. Der Teilumsatz des Brennstoffes ist ein charakteristisches Merkmal der Kalten Flammen und grenzt diese gegenüber einer herkömmlichen Verbrennung ab. Bei homogener Mischung des Brennstoff-Oxidator-Gemisches läßt sich bei unterstöchiometrischer Reaktionsführung der Kalten Flamme, beispielsweise $\lambda = 0,5$, eine noch relativ hohe Sauerstoffkonzentration in den Kalte Flamme-Produkten 3 feststellen. Demgegenüber wird der vorhandene Sauerstoff bei einer unterstöchiometrischen Verbrennung mit gleichem Luftverhältnis vollständig (nahe der Nachweisgrenze) aufgebraucht. Die Kalte Flamme-Produkte 3 setzen sich demnach aus den Reaktionsprodukten der Kalten Flamme, aber auch aus den nur zum Teil umgesetzten Edukten, d.h. dem Brennstoff und Oxidator, zusammen.

Aufgrund der für die Kalte Flamme charakteristischen reaktionskinetischen Hemmung ist der Temperaturanstieg des Gemisches limitiert, so daß eine Selbstzündung der bei der Kalten Flamme entstandenen Kalte Flamme-Produkte 3 vermieden wird. Es ergibt sich für den Einsatz von Heizöl EL und Luft unter atmosphärischen Druckbedingungen eine maximale Gemischtemperatur von etwa 480 °C, dabei ist diese weitgehend unabhängig vom eingestellten Luftverhältnis (siehe Fig. 5 und Fig. 7).

Je nach Ausgangssiedetemperatur oder -bereich wird der mit 1 bezeichnete Brennstoff dem Verfahren flüssig oder gasförmig zugeführt. Insbesondere stellt die Gemischaufbereitung von flüssigen Brennstoffen in vielen technischen Anwendungsfällen ein bedeutendes Problem dar. Schlechte Zerstäubung von flüssigen Brennstoffen führt zu Inhomogenitäten bei der Gemischaufbereitung und damit zur Bildung von Schadstoffen. Das erfindungsgemäße Verfahren trägt im Wesentlichen zur Verbesserung der Gemischbildung bei. Durch den Reaktionsmechanismus der Kalten Flammen erfolgt eine Molekülkettenverkleinerung der Kohlenwasserstoffe, die maßgeblich zur Absenkung der Siedetemperatur oder des Siedetemperaturbereichs beiträgt. Die in flüssiger Form eingesetzten Kohlenwasserstoffe können in die Gasphase überführt werden, wodurch die Gemischaufbereitung wesentlich verbessert wird. Nach Abkühlung auf Umgebungstemperaturbedingungen liegt das Produkt in bis zu drei Zuständen vor, in gasförmiger, flüssiger und in kolloid disperser Phase (Nebel/Aerosol). Dabei kann der Anteil der kolloid dispersen Phase überwiegen. Des Weiteren trägt das erfindungsgemäße Verfahren durch sein Temperaturniveau wesentlich zur Verdampfung des flüssigen Brennstoffes bei.

Die freigewordene Energie der exothermen Reaktion der Kalten Flamme unterstützt die Verdampfung und erzeugt ein Gasgemisch, das je nach Prozeßparametern, z.B.

Wärmeabgabe über die Reaktoraußenwand, sowohl bei überstöchiometrischen als auch unterstöchiometrischen Bedingungen keine Selbstzündung zeigt.

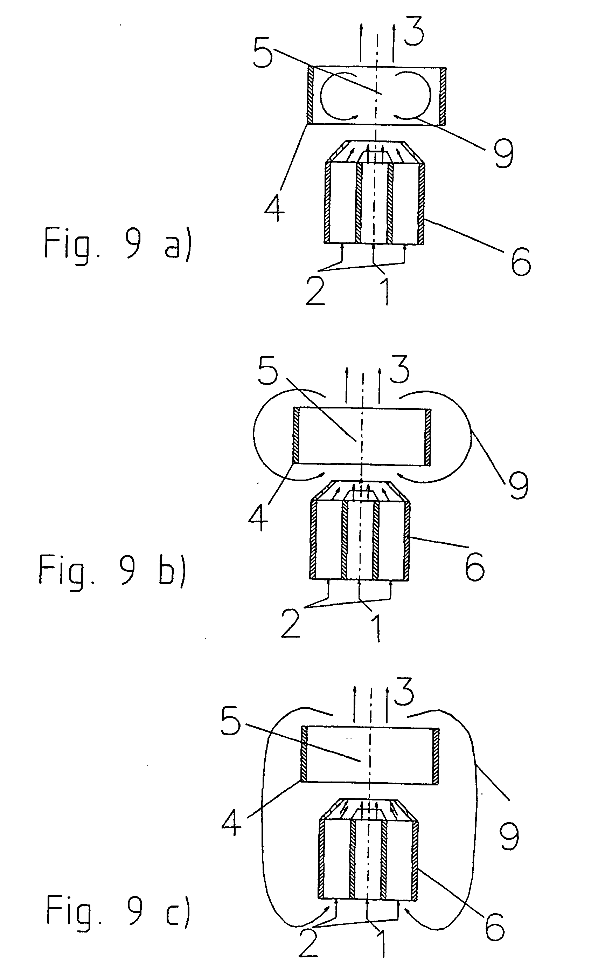

Die Initiierungs- und/oder die Betriebstemperatur der Kalten Flammen läßt sich durch eine Reihe von Maßnahmen absenken. Aus der Verbrennungstechnik bekannt ist die Rezirkulation von Reaktionsprodukten in die Reaktionszone. In den Fig. 9a bis 9c sind, basierend auf dem in Fig. 8 dargestellten Kalte Flammen-Generator, drei etablierte Verfahren zur Rezirkulation von Reaktionsprodukten dargestellt. Bei allen Verfahren werden die Kalte Flammen-Produkte 3 in die Reaktionszone 5 zurückgeführt. In Fig. 9a erfolgt die Rezirkulation innerhalb des Reaktionsrohres 14. Man spricht von einer internen Rezirkulation. Dahingegen werden die Reaktionsprodukte 3 in Fig. 9b und Fig. 9c außerhalb des Reaktionsrohres 4 der Reaktionszone 5 zugeführt (externe Rezirkulation). Hierbei unterscheiden sich Fig. 9b und Fig. 9c durch den Ort der Einkopplung der Reaktionsprodukte 9.

Bei der Rezirkulation von Kalte Flammen-Produkten und/oder von Produkten aus nachfolgenden Prozeßschritten in die Verdampfungszone gelingt es, die Betriebstemperatur der Kalten Flamme zu senken. Der insbesondere flüssige Brennstoff wird in einem Gemisch aus Luft und Produkten der Kalten Flamme einem Phasenwechsel unterworfen. Durch Rezirkulation der Kalte Flammen Produkte erhöht sich der Inertgasstrom, wodurch insbesondere für stark unterstöchiometrische Betriebsweisen die Selbstzündungsneigung inhibiert wird.

Darüber hinaus kann die Reaktionskinetik der Kalten Flammen durch gezielte Druckerniedrigung beeinflußt und damit die Starttemperatur gesenkt werden. Die Zugabe von geeignet katalytisch wirkenden Stoffen erniedrigt die zur Initiierung der Kalten Flamme erforderliche Aktivierungsenergie und trägt ebenso zum Absenken der Starttemperatur bei.

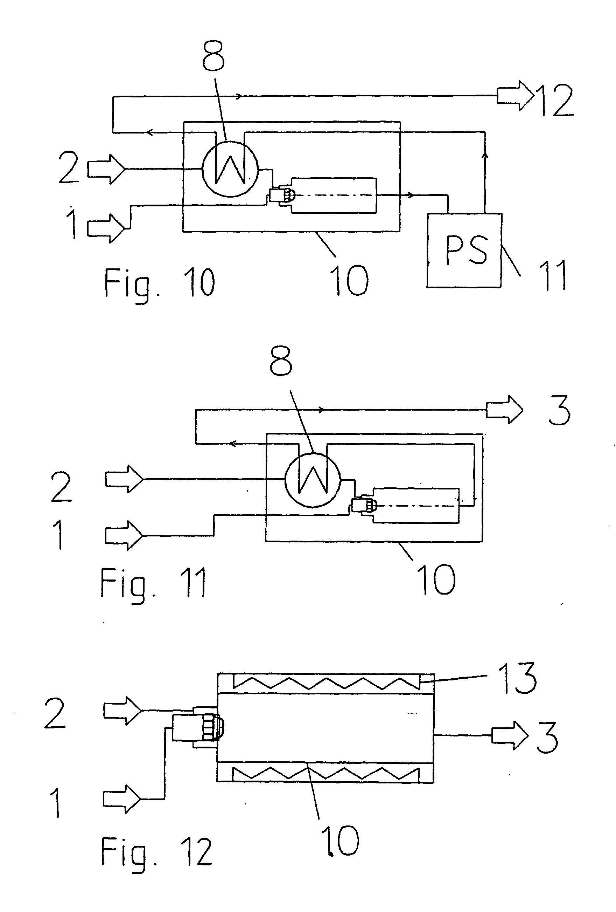

Für das Erreichen der Initiierungs- oder der Betriebstemperatur (bisher einheitlich in Anspruch 6 Starttemperatur genannt) ist ein Aufheizen des Oxidatorstroms erforderlich. Fig. 10 gibt ein Ausführungsbeispiel zur Einkopplung der Wärme in den in Fig. 8 dargestellten Kalte Flammen-Generator 10 wieder. Das den Kalte Flammen-Generator 10 verlassende Kalte Flammen-Produkt 3 wird hierbei einer nachfolgenden Prozeßstufe 11 zugeführt, dabei liegt die Temperatur des aus der Prozeßstufe 11 austretenden Gemischs 12 oberhalb der Oxidatortemperatur. Die zur Initiierung der Kalten Flamme erforderliche Wärmemenge wird dem Gemisch 12 durch den Oxidator-Vorwärmer 8 entzogen und in dem Oxidator 2 zugeführt.

Bei dem Verfahrensablauf in Fig. 11 wird die zum Erreichen der Betriebstemperatur erforderliche Wärme direkt aus dem Kalte Flammen-Produkt 3 entzogen und über den Oxidator-Vorwärmer 8 dem Oxidator 2 zugeführt. Eine weitere Möglichkeit der Wärmeeinkopplung ist in Fig. 12 veranschaulicht. Bei dieser Variante erfolgt die Wärmeeinkopplung an das Brennstoff-Oxidator-Gemisch über das Reaktionsrohr 4 des Kalte Flammen-Generators aus Fig. 8. Die Wärme kann beispielhaft durch eine elektrische Beheizung oder einen beliebigen Wärmekapazitätsstrom eingebracht werden. Eine weitere Form der Wärmeeinkopplung zur Brennstoffvorwärmung ist möglich.

Das im Kalte Flammen-Generator (Fig. 8) gewonnene Kalte Flammen-Produkt 3 liegt nach Abkühlung auf Umgebungstemperatur in gasförmiger, flüssiger und/oder kolloid disperser Phase vor. Durch die durch die Kalte Flamme in der Regel unterstützte Molekülkettenverkleinerung der Kohlenstoffketten liegt die Siedetemperatur oder der Siedetemperaturbereich des Kalte Flammen-Produkts 3 in jedem Fall unter der oder dem des eingesetzten Brennstoffes 1.

Je nach Bedarf läßt sich das Kalte Flamme-Produkt 3 durch Wahl der Zustands- und Prozeßparameter beeinflussen. Für Anwendungen der Gemischaufbereitung oder Synthesegasgewinnung ist es erforderlich, den Brennstoff weitgehend in die Gasphase zu überführen. Aus eigenen Versuchen ist bekannt, daß sich die Endtemperatur der Kalten Flamme nahezu unabhängig von der Starttemperatur auf einen konstanten Wert einstellt (siehe Fig. 3 und 4). Bei energetischer Betrachtung ergibt sich bei niedrigen Betriebstemperaturen im Betriebstemperaturbereich aufgrund der höheren Temperaturdifferenz ein entsprechend höherer Brennstoffumsatz. Gasanalysen des Kalte Flammen Produkts bestätigen, daß sich bei niedrigen Betriebstemperaturen ein höherer Brennstoffumsatz in der Gasphase einstellt.

Das erfindungsgemäße Verfahren wird vorteilhafterweise eingesetzt zur Aufbereitung und/oder Veredelung von flüssigen Kohlenwasserstoffen, insbesondere in Raffinerien oder in der chemischen Verfahrenstechnik, der Synthesegasherstellung, der Schutzgasherstellung, zur Bereitstellung von gasförmigen Brennstoffen für mobil oder stationär eingesetzte Brennstoffzellen, wie in Kraftfahrzeugen, Schienenfahrzeugen, Schiffen, Flugzeugen und/oder der Kraftwärmekopplung, zur Verbrennung in Verbrennungskraftmaschinen und/oder Feuerungsanlagen, zur Trennung von Stoffströmen von Begleitstoffen und Ähnlichem.

Mit dem erfindungsgemäßen Verfahren werden bisher ausschließlich für gasförmige Brennstoffe genutzte Verbrennungstechniken nun auch für flüssige Energieträger anwendbar. Der Einsatz flüssiger Brennstoffe ist in innovativen Systemen zur Versorgung mit Heizwärme und/oder elektrischer Energie, der Kraftwärmekopplung durch Blockheizkraftwerke, möglich, da durch die vollständige Vergasung der Vorteil der Gasmotoren mit den niedrigeren Brennstoffkosten flüssiger Brennstoffe verbunden werden kann. Die Abgasnachbehandlung ist durch diese Anwendung stark vereinfacht oder kann sogar komplett entfallen. Als weiteres Beispiel wird hier der Einsatz in Stirlingmaschinen genannt. Die Kalten Flammen können hierbei als Vorstufe im Prozeß der Wärmeerzeugung integriert werden.

Für den Einsatz flüssiger Brennstoffe in Brennstoffzellen kann das erfindungsgemäße Verfahren als "Vergaser" verwendet werden. Die Anforderung der Versorgung mit einem homogenen Prozeßgas mit hohem Heizwert wird erfüllt. Insbesondere für mobile Anwendungen besteht ein wesentlicher Vorteil in der einfachen Handhabung des ursprünglichen Brennstoffs in Bezug auf Lagerung und Sicherheit.

Durch das erfindungsgemäße Verfahren wird ein Gemisch mit neuen Eigenschaften erzeugt. Die Zusammensetzung des Brennstoffs ändert sich aufgrund der chemischen Reaktionen. Temperaturmessungen bei Umgebungsdruck und stöchiometrischen Bedingungen zeigen, daß bei Betriebstemperaturen um 300°C und Atmosphärendruck nahezu unabhängig vom Luftverhältnis beispielsweise 10 % der im Brennstoff (HEL) gebundenen chemischen Energie bereits in dem erfindungsgemäßen Verfahren umgesetzt wird. Durch Oxidations- und Zerfallsreaktionen reagieren dabei hauptsächlich lange Kohlenwasserstoffketten zu kurzen Molekülen.

Die Randbedingungen des Verfahrens können so eingestellt werden, daß das entstehende Produkt einen wesentlich niedrigeren Siedebereich als der ursprüngliche Brennstoff hat. Damit werden für den Einsatz dieser Technik in neuen Anwendungsbereichen zusätzliche Prozeßschritte möglich. Denkbar ist eine begrenzte Rückkühlung des Gases, die eine sichere Handhabung des Gemisches ermöglicht. Eine Zündung nach dem Radikalkettenmechanismus kann vollständig unterdrückt werden. Damit hat man die Möglichkeit, das Produktgas sicher aus den Aufbereitungverfahren zum Verbraucher zu transportieren und zu speichern. Der Modulationsbereich kann damit von der Leistungsschwankung eines beliebigen Verbrauchers entkoppelt werden.

Es gelingt darüber hinaus, das Verfahren so zu steuern, daß sogar selektiv petrochemische Synthesebausteine (z. B. Olefine oder Formaldehyd) mit hoher Ausbeute entstehen und eine Abtrennung dieser Kohlenwasserstoffe aus dem Produktgas interessant wird.

Ein großer Anwendungsbereich der Kalten Flamme liegt in der Herstellung von Synthesegasen jeglicher Art. Unter Synthesegas werden sowohl Gasströme verstanden, die in einem kontinuierlichen Prozeß erzeugt und eingesetzt werden, aber auch solche, die nach Erzeugung gespeichert und zu einem späteren Zeitpunkt zur Anwendung kommen.

In der Materialveredelung (z.B. bei Metallen) ist es beispielsweise erforderlich, eine reduzierende Atmosphäre, ein sogenanntes Endogas, zu erzeugen, das eine Oxidierung des zu verarbeitenden Materials unterbindet. Endogas wird üblicherweise durch eine unterstöchiometrische Verbrennung von Erdgas unter Wasserbeimischung hergestellt. Die Hauptgaskomponenten sind dabei $CO$, $CO_2$, $H_2$, $H_2O$, sowie Inertgaskomponenten. Je nach Einstellung der Prozeßparameter (Wasser-Brennstoff-Verhältnis, Luftverhältnis und Temperatur) kann die Zusammensetzung des Endogases beeinflußt werden. Bei der Verwendung flüssiger Brennstoffe in einer unterstöchiometrischen Verbrennung kommt es zur unerwünschten Rußbildung. Das erfindungsgemäße Verfahren ermöglicht die Umsetzung flüssiger Brennstoffe in die Gas- und Dampfphase in einer stark unterstöchiometrischen Atmosphäre ohne merkliche Rußablagerungen.

Das erfindungsgemäße Verfahren wird vorteilhafterweise zum Antrieb von mobilen Vorrichtungen jeglicher Art, insbesondere Fahrzeugen, eingesetzt. Beispielsweise liefert das erfindungsgemäße Verfahren aufbereitete Brennstoffe für Otto-/Dieselmotoren und/oder Brennstoffzellen.

In ähnlicher Weise liefert das erfindungsgemäße Verfahren aufbereitete Brennstoffe, die zur Kraft-, Stromerzeugung und/oder Wärmebereitstellung in immobilen Vorrichtungen eingesetzt werden. Beispielsweise können die aufbereiteten Brennstoffe in Blockheizkraftwerken (BHKWs), Stromgeneratoren, Brennstoffzellen sowie Feuerungsanlagen benutzt werden.

Vorzugsweise wird beim erfindungsgemäßen Verfahren als Oxidator Luft und/oder Sauerstoff verwendet und die Edukte aus Schritt (a) des erfindungsgemäßen Verfahrens werden unterstöchiometrisch, vorzugsweise bei einem Luftverhältnis von $\lambda = 0{,}2$ bis $0{,}7$, zugeführt. Durch Zugabe von Wasser oder Wasserdampf lassen sich die für die Endogasherstellung erforderlichen Gaskomponenten synthetisieren.

In einer bevorzugten Ausgestaltung der Stufe (b) des erfindungsgemäßen Verfahrens wird ein weiterer Stoffstrom der Stufe (b) zugeführt, der im Wesentlichen aus Kohlenwasserstoffen, Gemischen von Kohlenwasserstoffen und nicht Kohlenwasserstoffen entspricht. Unter nicht Kohlenwasserstoffen wird bei der Synthesegasherstellung insbesondere Wasser und/oder Wasserdampf verstanden, wodurch im Wesentlichen zur Verfahrensverbesserung durch Verringerung der Rußbildungsneigung beigetragen wird. In einer anderen Anwendungsform des erfindungsgemäßen Verfahren kann als nicht Kohlenwasserstoff Luft zugeführt werden, um damit eine luftgestufte Verbrennung (Luftstufung) zu erzielen. Wie bei der Synthesegasherstellung wird die Kalte Flamme bei einem niedrigen Luftverhältnis, beispielsweise bei $\lambda < 1$, eingestellt. Zum Einstellen der erforderlichen Sauerstoffmenge, z.B. zum Einleiten einer vollständigen Verbrennung, wird dem Kalte Flammen-Produkt anschließend Luft oder Abgas einer überstöchiometrischen Verbrennung beigemischt.

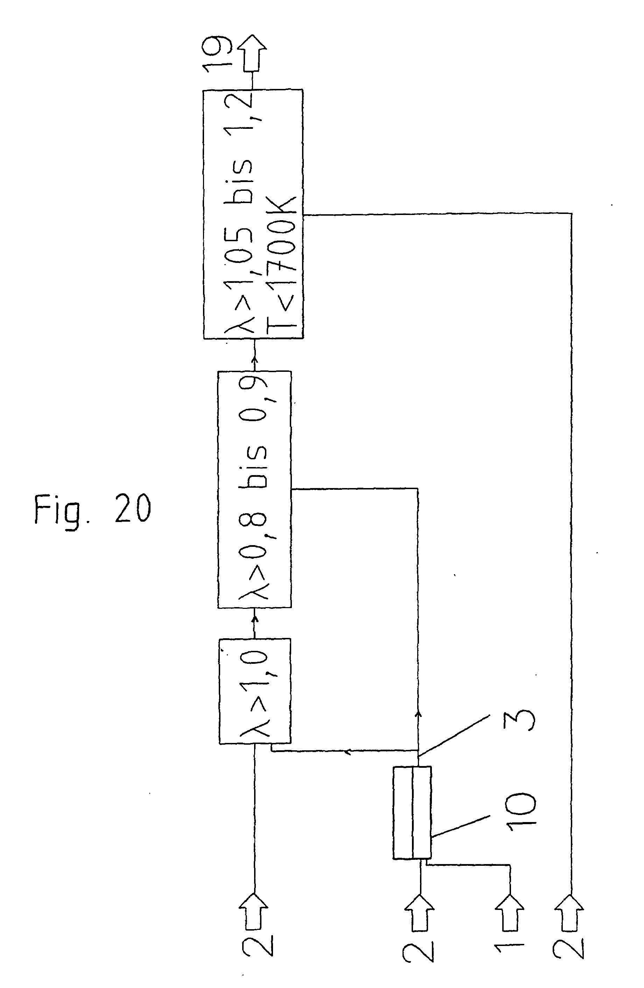

In Fig. 20 ist ein weiteres Ausführungsbeispiel für einen Verbrennungsprozeß mit Brennstoffstufung zur Stickoxidreduzierung dargestellt, bei dem Gemisch der Stufe (b) aus Anspruch 1 ein weiterer Stoffstrom zugeführt wird. Bei der sogenannten dreistufigen Verbrennung wird das unterstöchiometrisch erzeugte Kalte Flammen-Produkt 3 mit Luft 2 in der Primärstufe überstöchiometrisch unter hoher NO-Produktion umgesetzt. Der Anteil des eingeleiteten Kalte Flammen-Produkts in dieser Stufe beträgt, bezogen auf das im Kalte Flammen-Generator 10 erzeugte Produkt, ca. 70 %. In der zweiten Stufe wird das restliche Kalte Flammen-Produkt eingemischt, so daß sich eine insgesamt reduzierende Atmosphäre einstellt, in der dann das in der ersten Stufe gebildete NO zu $N_2$ reduziert wird. Im Stand der Technik stellt die Eindüsung und Mischung des flüssigen Brennstoffes in die zweite Verbrennungsstufe ein wesentliches Problem dar. Die Öleindüsung in einen heißen Gasstrom ruft häufig Crackreaktionen und Ablagerungen von Ölbestandteilen im Bereich der ölführenden Teile und heißen Oberflächen hervor, die durch das erfindungsgemäße Verfahren überwunden werden. Der vollständige Ausbrand erfolgt in der Tertiärstufe, wo durch Zugabe sogenannter Restluft insgesamt überstöchiometrische Bedingungen eingestellt werden.

Bei den Energieumwandlungssystemen gewinnen Brennstoffzellen künftig an Bedeutung. Zur Energieerzeugung werden diese nach dem heutigen Stand der Technik vorzugsweise mit gasförmigen Brennstoffen beaufschlagt. Vornehmlich wird molekularer Wasserstoff als Energieträger für Brennstoffzellen verstanden. Darüber hinaus ermöglichen einige Brennstoffzellen auch den Einsatz von kurzkettigen Kohlenwasserstoffen und auch Kohlenmonoxid. Um den Einsatz von flüssigen Brennstoffen für Brennstoffzellen zu ermöglichen, sind technisch aufwendige Umsetzungsverfahren, wie die Dampfreformierung, die autotherme Reformierung oder die (katalytische) partielle Oxidation, erforderlich. Verfahren, die im großtechnischen Maßstab etabliert sind, lassen sich auf die für Brennstoffzellen relevanten Leistungsbereiche nicht problemlos skalieren. Prinzip bedingt kommt es bei diesen Verfahren unter anderem zur Rußbildung und infolge der hohen Prozeßtemperaturen zu Wirkungsgradeinbußen.

Hierbei wird das Phänomen der Kalten Flamme genutzt, um die genannten Probleme zu lösen. Wie bereits bei der Synthesegasherstellung beschrieben, ermöglicht das erfindungsgemäße Verfahren die Umsetzung von flüssigen Brennstoffen in die Gasphase. Versuche mit Heizöl EL und Luft unter atmosphärischen Druckbedingungen in einer Vorrichtung gemäß Fig. 8 bestätigen, daß das Verfahren bei einem für Brennstoffzellen relevanten Luftverhältnis von $\lambda=0{,}3$ ohne Rußablagerung durchführbar ist. Mit einem zusätzlichen Einbau zur Rezirkulation gemäß Fig. 9b und einer Verweilzeit von $t_v = 0{,}85$ s läßt sich das Luftverhältnis bei Umgebungsdruck sogar bis $\lambda = 0{,}1$ absenken.

Vorzugsweise wird beim erfindungsgemäßen Verfahren als Oxidator Luft und/oder Sauerstoff verwendet und die Edukte aus Schritt (a) des erfindungsgemäßen Verfahrens werden unterstöchiometrisch, vorzugsweise bei einem Luftverhältnis von $\lambda = 0{,}2$ bis $0{,}7$, zugeführt. Je Prozeßführung ist es sinnvoll, zumindest teilweise das sauerstoffhaltige Abgas der Brennstoffzellenreaktion als Oxidator zu verwenden.

Vorzugsweise wird das aus Stufe (b) des erfindungsgemäßen Verfahrens erhaltene Produkt durch bekannte Verfahrensschritte, vorzugsweise der partiellen Oxidation, der Dampfreformierung und/oder der Shiftgasreaktion (Wassergasreaktion) in ein für Brennstoffzellen geeignetes Brenngas, wie beispielsweise Wasserstoff, oder einem Brenngasgemisch aus Wasserstoff, Kohlenmonoxid und/oder kurzkettigen Kohlenwasserstoffen, überführt.

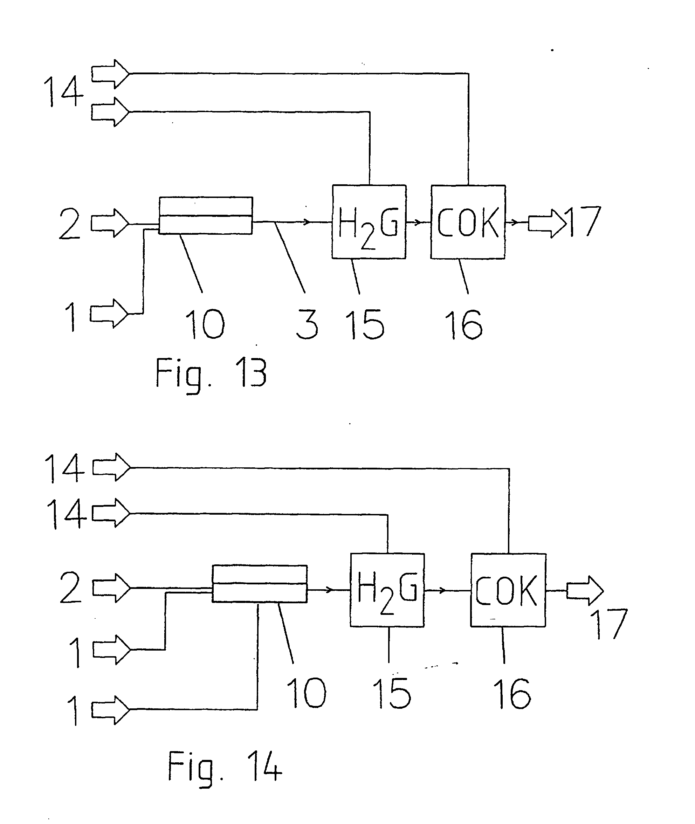

Fig. 13 stellt ein Ausführungsbeispiel für die Umsetzung von flüssigen Brennstoffen in ein für Brennstoffzellen geeignetes Brenngas dar. Unter dem mit 17 gekennzeichneten Begriff Brennstoffzellen geeignetes Brenngas, werden diejenigen Gasgemische verstanden, die als Brennstoff für Brennstoffzellen verwendet werden können. Je nach Brennstoffzellen-Typ, wie beispielsweise der Membranbrennstoffzelle (PEMFC) oder den Hochtemperaturbrennstoffzellen (SOFC, MCFC), ergeben sich unterschiedliche Anforderungen an die Zusammensetzung des Brenngases. Für den Einsatz in Brennstoffzellen werden als Brennstoff 1 vorzugsweise Mitteldestillate, wie Heizöl EL, Diesel-, Benzinkraftstoffe, Kerosin oder ähnliche, verstanden.

Für Brennstoffzellen geeignetes Brenngas kann beispielsweise hergestellt werden, wenn Heizöl EL und die vorgewärmte Verbrennungsluft unterstöchiometrisch mit einem geringen Luftverhältnis, insbesondere $\lambda$ = 0,1 bis 0,5, dosiert werden und in einen Kalte-Flammen-Prozeß eingekoppelt werden. Die Vorwärmung kann dabei nach den oben beschriebenen Methoden erfolgen. Das den Kalte Flammen-Generator 10 verlassende Produktgemisch 3 wird in einer anschließenden Verfahrensstufe zur $H_2$-Gewinnung 15 verwertet. Hierbei können technisch bekannte Verfahren, wie die (katalytische) partielle Oxidation oder die autotherme Reformierung nachgeschaltet werden. Zur optionalen CO-Konvertierung 16 durchläuft das synthetisierte Gasgemisch üblicherweise eine Shiftstufe (Wassergasreaktion) und eventuell eine nachfolgende Kohlenmonoxid-Feinreinigung.

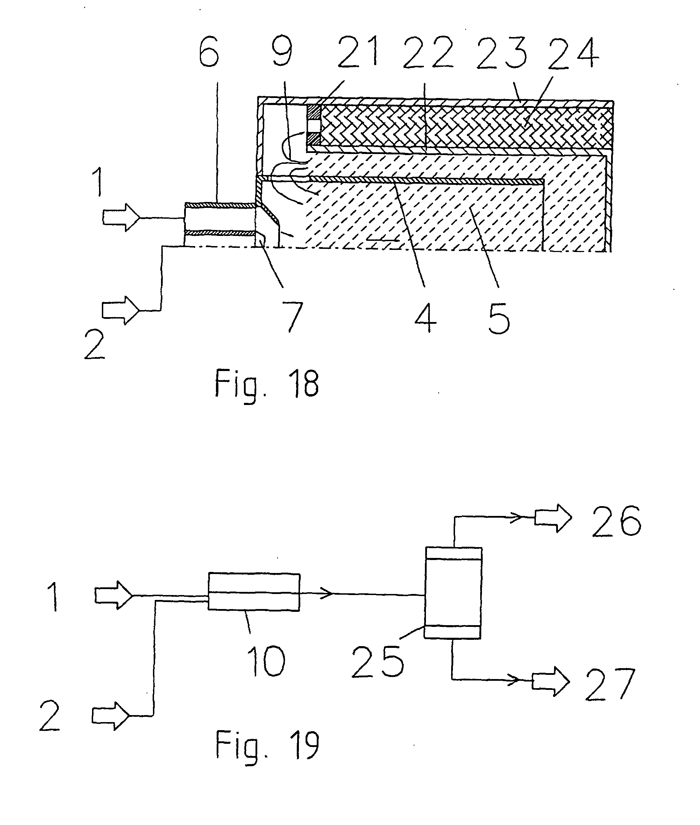

Um Rückwirkungen aus dem Bereich der Hochtemperaturoxidation, der partiellen oder vollständigen Oxidation, auf die Reaktion der Kalten Flamme zu verhindern, sind beide Reaktionsräume durch eine strömungstechnische und thermische Entkopplung zu trennen. Die strömungstechnische Entkopplung kann beispielsweise durch eine Flammenrückschlagsicherung ausgeführt werden, die durch lokale Erhöhung der Gemisch-Strömungsgeschwindigkeit ein Zurückwandern der Flammenwurzel aus der Hochtemperaturoxidation verhindert. Ein Ausführungsbeispiel einer Flammenrückschlagsicherung 21 ist in Fig. 18 dargestellt. Die thermische Entkopplung soll vermeiden, daß sich das Kalte Flammen-Produkt vor dem Eintreten in die Hochtemperaturoxidation an heißen Oberflächen entzündet. Die heißen Oberflächen können hierbei durch Wärmeleitung aus der Hochtemperaturoxidation hervorgerufen werden.

Durch Variation der in den Prozeß eingekoppelten Stoffströme, insbesondere Wasser und Öl, läßt sich der beschriebene Verfahrensablauf modifizieren. In einer bevorzugten Ausgestaltung der Stufe (b) des erfindungsgemäßen Verfahrens wird ein weiterer Stoffstrom der Stufe (b) zugeführt, der im wesentlichen aus Kohlenwasserstoffen, Gemischen von Kohlenwasserstoffen und nicht Kohlenwasserstoffen besteht.

Je nach Randbedingungen ist es vorteilhafter die Kalte Flamme bei einem höheren Luftverhältnis zu initiieren als für die Synthesegasherstellung erforderlich ist. Um dennoch das erforderliche Brennstoff-Oxidator-Verhältnis einzustellen, kann der Kalte Flammen-Generator 10 mit einer zweistufigen Brennstoffzuführung versehen werden (siehe Fig. 14). Hierbei werden Brennstoff 1 und Oxidator 2 dem Kalte Flammen-Generator 10 zunächst mit einem höheren, als für den Prozeß erforderlichen Luftverhältnis zugeführt. Die zweite Brennstoffeindüsung reguliert das für den Prozeß erforderliche Luftverhältnis. Der positive Nebeneffekt der nachträglichen Eindüsung von flüssigen Brennstoffen resultiert daraus, daß dem Gemisch im Reaktor Verdampfungswärme entzogen wird und damit die Gemischtemperatur reduziert wird. Hierdurch kann ein erneutes Initieren der Kalten Flamme eingeleitet werden, so daß ein weiterer Brennstoffumsatz und damit die weitere Vergasung des Brennstoffes erfolgen kann.

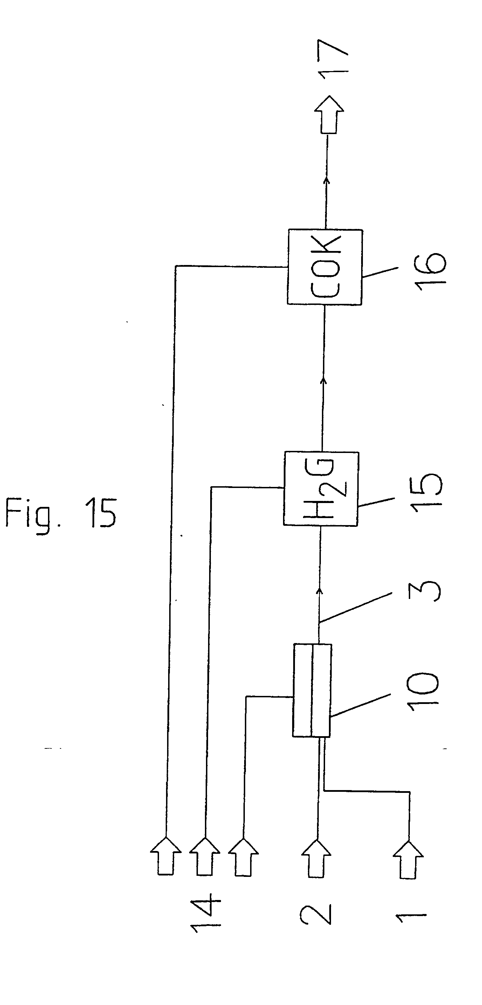

Eine weitere Maßnahme ist die Wasser- oder Wasserdampfeinspeisung 14 in die Reaktionszone der Kalten Flamme (siehe Fig. 15). Wasser oder Wasserdampf werden üblicherweise bei unterstöchiometrischen Reaktionen zur Verhinderung der Rußbildung eingesetzt und dienen in dem erfindungsgemäßen Verfahren gleichzeitg zur Verbesserung der Wasserstoffausbeute. Die Eindüsung von flüssigem Wasser ruft durch die Verdampfungsenthalpie zusätzlich eine Abkühlung des Kalte Flammen-Produkts hervor, daß wegen der Absenkung der Starttemperatur einen erhöhten Brennstoffumsatz in der Kalten Flamme erwarten läßt.

Das Gemisch aus Stufe (b) des erfindungsgemäßen Verfahrens kann zumindestens teilweise einer Druckerhöhung unterzogen werden. Eine weitere Ausführungsform des erfindungsgemäßen Verfahrens mit einer nachträglichen Druckerhöhung sieht der Einsatz zur Anwendung in Wärmekraftmaschinen vor.

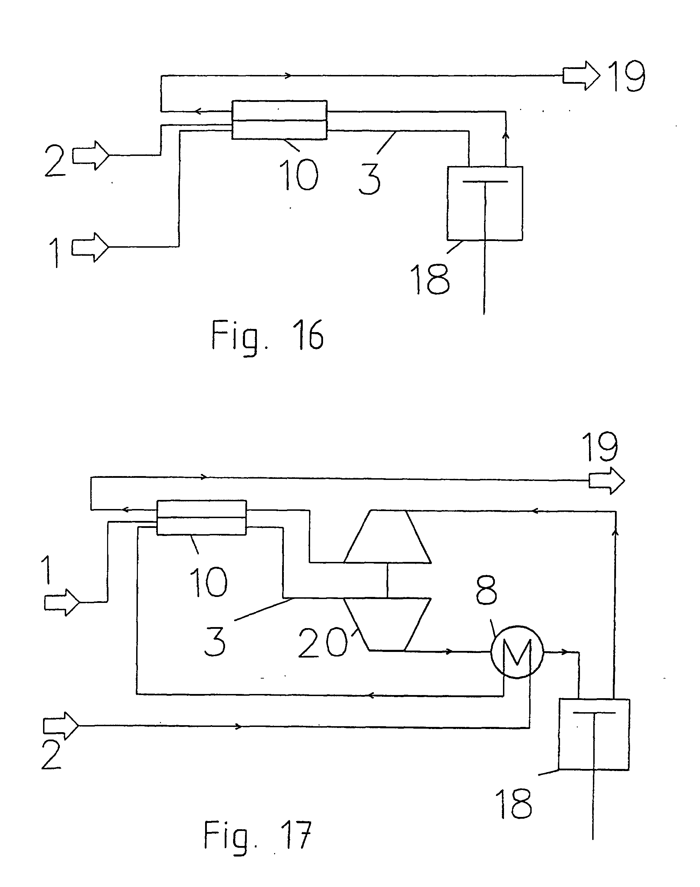

In Fig. 16 ist der in Fig. 8 dargestellte Kalte Flammen-Generator in Kombination mit einer Verbrennungskraftmaschine 18 dargestellt. Das erfindungsgemäße Verfahren fungiert hierbei zur Gemischaufbereitung der nachfolgenden Verbrennungskraftmaschine 18. Der Brennstoff 1, vornehmlich ein Mitteldestillat, wie Diesel, Benzin oder ähnliche, und der Oxidator 2, vorzugsweise Luft, wird dem Kalte Flammen-Generator 10 mit einem technisch sinnvollen Luftverhältnis zugeführt. Das resultierende Produktgasgemisch 3 wird in der nachfolgenden Verbrennungskraftmaschine 20 unter ottomotorischen Bedingungen komprimiert und anschließend verbrannt. Das die Verbrennungskraftmaschine 18 verlassende Abgas 19 dient zur Vorwärmung des Brennstoff-Oxidator-Gemisches im Kalte Flammen-Generator 10.

Ein wesentlicher Vorteil des erfindungsgemäßen Verfahrens in Kombination mit einer Verbrennungskraftmaschine liegt in der wesentlich besseren Gemischaufbereitung im Vergleich zu herkömmlichen Otto- und Dieselmotoren, was zugleich eine Reduktion der Schadstoffe zur Folge hat. Bei Dieselmotoren wird insbesondere durch Ruß- und $NO_x$-Reduzierung die Erreichung des ULEV-Standards ermöglicht. Desweiteren ermöglicht die Vorvergasung durch die Kalte Flamme die Realisierung von Magermotor-Konzepten, die eine wesentliche Wirkungsgradsteigerung gegenüber etablierten Techniken ermöglicht. Magermotoren sind im wesentlichen Ottomotoren, die, gegenüber herkömmlichen Motoren mit einer nahstöchiometrischen Verbrennung, mit wesentlich höheren Luftverhältnissen (bis zu $\lambda = 4$) arbeiten, wodurch eine starke Reduzierung der $NO_x$-Bildung erreicht wird.

Untersuchungen an einem Versuchsaufbau gemäß Fig. 14 zeigen, daß ein ottomotorischer Betrieb mit dem Kalte Flammen-Produkt auf Basis von Diesel als Brennstoff 1 möglich ist. Wegen der verbesserten Klopffestigkeit des Kalte Flammen-Produkts (im Vergleich zu Ottokraftstoffen) kann der ottomotorische Betrieb bei wesentlich höheren Prozeßdrücken erfolgen. Hierdurch sind erhebliche Wirkungsgradsteigerungen insbesondere im Teillastbetrieb gegenüber herkömmlichen Ottomotorprozeßen zu erwarten.

Aufbauend auf Fig. 16 ist der Verbrennungskraftmaschinen-Prozeß in Fig. 17 hinsichtlich einer Wirkungsgradsteigerung optimiert. Das den Kalte Flammen-Generator 10 verlassende Produktgemisch 3 wird beispielhaft in einem herkömmlichen Turbinenabgaslader 20 vorkomprimiert und in dem nachgeschalteten als Ladeluftkühler fungierenden Oxidator-Vorwärmer 8 gekühlt. Der hierbei übertragene Wärmestrom dient zur Vorwärmung der eingesetzten Luft 2. Die Maßnahmen, Turbinenabgaslader in Kombination mit Ladeluftkühler, verbessern im Wesentlichen den Füllungsgrad der Verbrennungskraftmaschine 18 und damit zugleich den Wirkungsgrad. Der in der Motorentechnik verwendete Begriff Füllungsgrad beschreibt das Verhältnis des in den Zylinder eingebrachten Gemischvolumens zu dem eigentlichen Zylinderhubvolumen, jeweils bezogen auf atmosphärische Druckbedingungen.

Das erfindungsgemäße Verfahren ermöglicht es, einen einheitlichen Vergaser für unterschiedliche flüssige Brennstoffe (z. B. Benzin, Kerosin, Diesel) einzusetzen, wodurch ein Vielstoffinotor in einfacher Weise realisierbar wird.

Weitere Anwendungen im Bereich der Verbrennungstechnik sind denkbar. Hierbei ermöglicht das erfindungsgemäße Verfahren den Einsatz flüssiger Brennstoffe in Anwendungen, die bisher nur auf gasförmige Brennstoffe beschränkt waren. Beispielhaft kann der Kalte Flammen-Generator einem Turbinenprozeß vorgeschaltet werden, um ein homogenes Brennstoff-Verbrennungsluft-Gemisch zu erzeugen. Durch das erfindungsgemäße Verfahren läßt sich die Zündverzugszeit des erzeugten brennbaren Gemisches mit dem Turbinenprozeß angleichen.

In einer weiteren Ausgestaltung des erfindungsgemäßen Verfahrens kann das Gemisch aus Stufe (b) zumindest teilweise einem Trennprozeß, vorzugsweise einem thermischen Trennprozeß unterzogen werden.

Spektralanalysen der Kalte Flammen-Produkte 3, sowohl in gasförmiger als auch in flüssiger Phase, bestätigen, daß durch das erfindungsgemäße Verfahren eine Stoffverwertung des eingesetzten Brennstoffes vollzogen wird. Je nach Bedarf lassen sich die Produkte durch Einstellen der Zustands- und Prozeßparameter, wie Temperaturführung, Druck, Mengenverhältnis der Einsatzstoffe und/oder katalytische Einwirkung, gezielt beeinflussen. Fig. 19 stellt einen Stoffverwertungs- und Stofftrennungsprozeß dar. Hierbei wird dem Kalte Flammen-Generator 18 ein Trennapparat 32 (z.B. Phasentrennung, Membrantrennung, Adsorption, Absorption) nachgeschaltet. Einsatzgebiete für den dargestellten Stoffverwertungs- und Trennungsprozeß ergeben sich unter anderem in Raffinerieanwendungen (Synthese von ungesättigten Kohlenwasserstoffen, wie Alkenen; Teiloxidierung von Kohlenwasserstoffen zur Bildung von Ketonen, Aldehyden oder Karbonsäuren; Abtrennung von unerwünschten Erdölfraktionen, wie Stickstoff-, Chlor-, Fluor- und/oder Schwefelverbindungen und Ähnlichen) oder der Synthesegasherstellung zur Abscheidung unerwünschter Bestandteile (Schwefelabscheidung bei der Brenngasherstellung für Brennstoffzellen). Prinzipiell ist es denkbar, Rohölfraktionen durch das erfindungsgemäße Verfahren einer ersten Stoffbehandlung zu unterwerfen.

Das erfindungsgemäße Verfahren führt zu einem neuen Produkt, welches erhältlich ist durch irgendeinen der weiter oben beschriebenen Verfahrensschritte.

In Fig. 18 ist eine konstruktive Ausführung des erfindungsgemäßen Verfahrens in einem Ölbrenner für Feuerungsanlagen mit einer thermischen Leistung vorzugsweise größer 1 kW dargestellt (Schnittzeichnung). Kernbestandteil des dargestellten Brenners ist der aus Fig. 8 bekannte Kalte Flammen-Generator. Die Reaktionszone der Kalten Flamme 5 bildet sich hierbei im gesamten Gebiet des Reaktionsrohres 4 und dem durch das Brennerrohr 22 und das Reaktionsrohr 4 gebildeten Ringspalt aus. Das gesamte System wird von dem Mantelrohr 23 umschlossen. In dem sich zwischen dem Mantelrohr 23 und dem Brennerrohr 22 ergebenden Ringspalt wird das Produktgas 3 verbrannt. Die zum Einleiten der Kalten Flammen benötigte Wärme wird gemäß dem Vorwärmungsprinzip in Fig. 12 aus dem Bereich der Verbrennung 24, der als Porenkörper oder als Hohlraum ausgestaltet ist, entzogen und über die Brennrohrwand 22 in die Prozeßzone der Kalten Flammen 5 eingekoppelt. Zur Absenkung der Starttemperatur wird die in Fig. 9b) dargestellte externe Rezikulation 9 der Kalte Flammen-Produkte 3 konstruktiv umgesetzt. Als Rückschlagsicherung dient der mit 21 dargestellte Flammenhalter.

**Literaturverzeichnis**

*Affens, R. S.; Sheinson, W. A.*: Autoignition: The Importance of the Cool Flame in the Two-Stage-Process. Naval Research Laboratory, Washington D.C.. In: Loss Prevention, American Institut of Chemical Engineers, 1979 (Band 13). S. 83 - 88.

*Brand, R.; Schilling, J.; Müller,* W.: Experimentalstudie zur Entwicklung eines neuen Haushaltsölbrenners, Bundesministerium für Forschung und Technik (BMFT), Forschungsbericht T 81-006, 1981

*Coffee, R. D.*.: Cool Flames and Autoignition: Two Oxidation Processes. In: Loss Prevention, American Institut of Chemical Engineers, 1979 (Band 13). S. 74- 82.

*Freytag. H. H.:* Handbuch der Raumexplosionen. Verlag Chemie GmbH, Weinheim, 1965.

*Kostka, H.; Michel, A*.: Regelbarer Vergasungsbrenner kleiner Leistung, Bundesministerium für Forschung und Technik (BMFT), Forschungsbericht T 82-038, 1982

*Lefebvre, A.; Freeman, W.; Cowell, L.*: Spontaneous ignition delay characteristics of hydrocarbon fuel/air mixtures, NASA Contractor Report 175064, 1986

*Mallog, J.; Eisfeld, F.*; Universität Kaiserslautern, Lehrstuhl für Kraft- und Arbeitsmaschinen im Fachbereich Maschinenwesen: Auslegung von regelbaren Verdampfungsbrennern für Hausheizungen kleinerer Leistung mit hoher Energieausnutzung. Eggenstein: Fachinformationszentrum Energie, Physik, Mathematik GmbH, 1983 (BMFT - FB - T 83-229) - Forschungsbericht im Auftrag des Bundesministerium für Forschung und Technik

*Pitsch, H.; Müller, U. C.; Peters, N.:* Modellierung des Zündvorgangs am Einspritzstrahl bei dieselmotorischer Verbrennung, In: VDI Berichte Nr. 1193, 1995, S. 533 - 540

*Schilling, S*.: Aerosolbrenner mit reaktivem Flammenhalter als Flächenbrenner für Kleinst-leistungen. In: Brennpunkt (1997), Nr. 34, Heft Nr. 11, S. 3 - 5

*Spadaccini, L. J.; TeVelde, J. A*.: Autoignition characteristics of aircrafttype fuels, In: Combustion and Flame 46, 1982, S. 283 - 300

*Stoffel, B.; Reh, L*.: Conversion of liquid to gaseous fuels for lean premixed combustion. International Gas Turbine and Aeroengine Congress and Exposition, Houston, Texas, 1995

*Warnatz, J.; Maas, U*.: Technische Verbrennung, Springer Verlag, Berlin, 1993, ISBN 3-540-56183-8, S. 104 ff.

*Zabetakis, M. G. ; Furno, A. L. ; Jones, G. W*.: Minimum spontaneous ignition temperatures of combustibles in air. In: Ind. & Eng. Chem. (1954) No. 46, S. 2173 - 2178

**Patentansprüche**

1. Verfahren zur Verwertung eines Brennstoffes, der eine Ausgangssiedetemperatur oder überwiegend einen Ausgangssiedetemperaturbereich bei 1 bar zwischen 231 K und 830 K aufweist, wobei

   (a) der Brennstoff bei einem Druck p ≥ 1 bar mit mindestens einem auf 520 K bis 880 K oder bei niedrigerem Druck mit einer Absenkung des Temperaturbereichs vorgewärmten Oxidator und einem molaren C/O-Verhältnis des Gemisches aus Brennstoff und Oxidators zwischen 1 : 0,14 bis 1 : 25 in einem Reaktionsraum so in Kontakt gebracht wird, dass exotherme Vorreaktionen in Form einer Kalten Flamme initiiert werden, die auch bei homogener Mischung von Brennstoff und Oxidator nur einen Teilumsatz des Brennstoffs und des Oxidators bewirken, und

   (b) durch Einstellen einer technisch relevanten Verweilzeit $t_v$ des in Schritt a) hergestellten Gemisches In den Reaktionsraum, von $t_v$ > 25 ms bei p ≤ 1 bar und Verweilzeiten, die bei Erhöhung des Drukkes unter sonst gleichen Bedingungen kleiner werden, und einer begrenzten Wärmeabfuhr aus der Reaktionszone mit einem Verhältnis des Wärmekapazitätstroms des Oxidators in der Reaktionszone $\dot{M} \cdot c_p$ zum Produkt aus Brennstoffmassenstrom $\dot{M}_b$ und Helzwert $H_u$, das im adiabaten Reaktionsraum $\dot{M} \cdot c_p / \dot{M}_b \cdot H_u > 2 \times 10^{-4}\ K^{-1}$ ist, und/oder über die Reaktorwand mit einer Wärmestromdichte $\dot{q}$ von $\dot{q}$ < 85 kW/m$^2$ eine kinetische Reaktionshemmung der Weiterreaktion des bei der Kalten Flamme entstandenen, oxidierbaren Gemisches eintritt, wodurch eine Selbstzündung desselben insbesondere für eine voraussagbare Zeit verhindert wird.

2. Verfahren nach Anspruch 1, wobei als Brennstoff im wesentlichen Kohlenwasserstoffe, Gemische von Kohlenwasserstoffen mit nicht Kohlenwasserstoffen, in Form von Emulsionen und/oder Suspensionen mit in Kohlenwasserstoff im wesentlichen unlöslichen Flüssigkeiten, insbesondere Wasser, im Gemisch mit Ammoniak, Schwefelwasserstoff und/oder Alkanolen eingesetzt wird.

3. Verfahren nach Anspruch 2, wobei der Oxidator Sauerstoff, Ozon, Luft, Abgase aus überstöchiometrischer Verbrennung, eine Sauerstoff enthaltene Verbindung, wie Peroxide enthaltene Verbindung, Schwefeloxide, Stickoxide (N$_y$O oder NO$_x$) ist.

4. Verfahren nach mindestens einem der Ansprüche 1 bis 3, wobei durch Abkühlung eine mindestens

teilweise Vernebelung des Produktes nach Anspruch 1 (b) erzielt wird.

5.  Verfahren nach mindestens einem der Ansprüche 1 bis 4, wobei das Gemisch aus Schritt (b) von Anspruch 1 in ein System der Stufe (a) des Anspruchs 1 mindestens teilweise zurückgeführt wird.

6.  Verfahren nach mindestens einem der Ansprüche 1 bis 5, wobei die Starttemperatur der exothermen Vorreaktionen durch Druckerniedrigung des Gemisches von Oxidator und Brennstoff durch Rezirkulation zumindest eines Teils des Gemisches der Stufe (b) des Anspruchs 1 und/oder Zugabe eines Katalysators gesenkt wird.

7.  Verfahren nach Anspruch 6, wobei die zur Initiierung der Reaktionen der Stufe (a) aus Anspruch 1 notwendige Energie aus der exothermen Vorreaktion gemäß Stufe (a) des Anspruchs 1 und/oder durch Einkopplung von Energie aus einem nachgeschalteten Prozess bezogen wird.

8.  Verfahren nach mindestens einem der Ansprüche 1 bis 7, wobei das Gemisch der Stufe (b) des Anspruchs 1 bei einem niedrigeren Temperaturbereich kondensiert, als demjenigen, der dem Ausgangssiedetemperaturbereich des Brennstoffs entspricht.

9.  Verfahren nach mindestens einem der Ansprüche 1 bis 8 zur Aufbereitung und/oder Veredelung von Brennstoffen, insbesondere in Raffinerien, der Synthesegasherstellung, der Schutzgasherstellung, zur Bereitstellung von gasförmigen Brennstoffen für Brennstoffzellen, zur Verbrennung in Verbrennungskraftmaschinen und/oder Feuerungsanlagen, zur Trennung von Stoffströmen von Begleitstoffen.

10. Verfahren nach mindestens einem der Ansprüche 1 bis 9 zum Antrieb von mobilen Vorrichtungen, wie Fahrzeugen.

11. Verfahren nach mindestens einem der Ansprüche 1 bis 9 zum Einsatz in immobilen Vorrichtungen, wie Vorrichtungen zur Kraft-, Stromerzeugung und/oder Wärmebereitstellung.

12. Verfahren nach Anspruch 9, wobei als Oxidator vorzugsweise Luft und/oder Sauerstoff verwendet wird und die Edukte aus Schritt (a) von Anspruch 1 unterstöchiometrisch, vorzugswelse bei einem Luftverhältnis von λ = 0,2 bis 0,7, zugeführt werden.

13. Verfahren nach mindestens einem der Ansprüche 1 bis 12, wobei dem Gemisch der Stufe (b) des Anspruchs 1 ein weiterer Stoffstrom zugeführt wird, der dem in Anspruch 2 definierten Brennstoff oder auch nicht Kohlenwasserstoffen, insbesondere wasserstoffhaltigen Stoffen, entspricht.

14. Verfahren nach Anspruch 9, wobei das Produkt aus Stufe (b) von Anspruch 1 durch technisch bekannte Verfahrensschritte, vorzugsweise der partiellen Oxidation, der Dampfreformierung und/oder der Shiftgasreaktion (Wassergasreaktion) in ein für Brennstoffzellen geeignetes Brenngas, wie beispielsweise Wasserstoff, Kohlenstoffmonoxid und/oder kurzkettige Kohlenwasserstoffe, überführt wird.

15. Verfahren nach Anspruch 9 und/oder 14, wobei die Brennstoffzelle eine Membranbrennstoffzelle (PEMFC) ist.

16. Verfahren nach mindestens einem der Ansprüche 1 bis 15, wobei das Gemisch aus Stufe (b) des Anspruchs 1 zumindest teilweise einer Druckerhöhung unterzogen wird.

17. Verfahren nach mindestens einem der Ansprüche 1 bis 16, wobei das Gemisch der Stufe (b) des Anspruchs 1 zumindest teilweise einem Trennprozess, vorzugsweise einem thermischen Trennprozess, unterzogen wird.

**Claims**

1.  A process for the utilization of a fuel having an initial boiling temperature or prevailing initial boiling temperature range at 1 bar of between 231 K and 830 K, wherein

    (a) the fuel is contacted with at least one oxidant preheated to from 520 K to 880 K at a pressure, p, of ≥ 1 bar, or at a lower pressure with a reduction of the temperature range, and a C/O molar ratio of the mixture of fuel and oxidant of between 1:0.14 and 1:25 in a reaction space to initiate exothermic prereactions in the form of a cool flame which cause only partial conversion of the fuel and oxidant even when the fuel and oxidant are homogeneously mixed; and

    (b) a kinetic reaction inhibition of the further reaction of the oxidizable mixture formed in the cool flame is provided by adjusting a technically relevant dwelling time $t_v$ of the mixture prepared in step (a) in the reaction space of $t_v$ > 25 ms at p ≤ 1 bar, and dwelling times which become shorter when the pressure is increased under otherwise equal conditions, and a limited heat dissipation from the reaction zone with a ratio of the heat capacity flow of the oxidant in the

reaction zone, $\dot{M} \cdot c_p$, to the product of fuel mass flow, $\dot{M}_b$, and heating value, $H_u$, which is, in the adiabatic reaction space, $\dot{M} \cdot c_p/\dot{M}_b \cdot H_u > 2 \cdot 10^{-4}$ K$^{-1}$, and/or through the reactor wall with a heat flow density, $\dot{q}$, of $\dot{q} < 85$ kW/m$^2$, whereby auto-ignition of the mixture is prevented, especially for a predictable period of time.

2. The process according to claim 1, wherein hydrocarbons, mixtures of hydrocarbons with non-hydrocarbons in the form of emulsions and/or suspensions with liquids substantially insoluble in hydrocarbon, especially water in admixture with ammonia, hydrogen sulfide and/or alkanols, are essentially used as said fuels.

3. The process according to claim 2, wherein said oxidant is oxygen, ozone, air, exhaust gases from superstoichiometric combustion, an oxygen-containing compound, such as a compound containing peroxides, sulfur oxides, nitrogen oxides ($N_yO$ or $NO_x$).

4. The process according to at least one of claims 1 to 3, wherein at least partial atomization of the product from claim 1 (b) is achieved by cooling.

5. The process according to at least one of claims 1 to 4, wherein the mixture from step (b) of claim 1 is at least partially recirculated into a system of step (a) of claim 1.

6. The process according to at least one of claims 1 to 5, wherein the starting temperature of the exothermic prereactions is lowered by a pressure reduction of the mixture of oxidant and fuel, by recirculation of at least part of the mixture of step (b) of claim 1, and/or by the addition of a catalyst.

7. The process according to claim 6, wherein the energy necessary for initiating the reactions of step (a) of claim 1 is obtained from the exothermic prereaction according to step (a) of claim 1 and/or by introducing energy from a downstream process.

8. The process according to at least one of claims 1 to 7, wherein the mixture of step (b) of claim 1 will condense at a lower temperature range than that corresponding to the initial boiling temperature range of the fuel.

9. The process according to at least one of claims 1 to 8 for the processing and/or refining of fuels, especially in refining plants, in synthesis gas production, protective gas production, for the provision of gaseous fuels for fuel cells, for combustion in combustion engines and/or firing plants, for the separation of product streams from accompanying substances.

10. The process according to at least one of claims 1 to 9 for driving mobile devices, such as vehicles.

11. The process according to at least one of claims 1 to 9 for use in immobile devices, such as devices for the generation of mechanical or electric power and/or heat.

12. The process according to claim 9, wherein air and/or oxygen is preferably used as the oxidant, and the educts from step (a) of claim 1 are supplied substoichiometrically, preferably at an air ratio of $\lambda = 0.2$ to 0.7.

13. The process according to at least one of claims 1 to 12, wherein an additional product stream essentially consisting of fuels as defined in claim 2 or non-hydrocarbons, especially materials containing water, is supplied to step (b) of claim 1.

14. The process according to claim 9, wherein the product obtained from step (b) of claim 1 is converted to a fuel gas suitable for fuel cells, such as hydrogen, carbon monoxide and/or short-chained hydrocarbons, by technically known process steps, preferably partial oxidation, steam reforming and/or shift conversion (water-gas reaction).

15. The process according to claims 9 and/or 14, wherein said fuel cell is a membrane fuel cell (PEMFC).

16. The process according to at least one of claims 1 to 15, wherein the mixture from step (b) of claim 1 is subjected, at least partially, to an increase in pressure.

17. The process according to at least one of claims 1 to 16, wherein the mixture from step (b) of claim 1 is subjected, at least partially, to a separation process, preferably a thermal separation process.

**Revendications**

1. Procédé d'utilisation d'un combustible, présentant une température d'ébullition initiale ou une plage de températures d'ébullition initiales à 1 bar, principalement comprise entre 231 K et 830 K, où

(a) le combustible à une pression $p \geq 1$ bar est mis en contact dans une enceinte de réaction avec au moins un oxydant, préchauffé entre 520 K et 880 K ou bien, à plus faible pression, dans une plage de températures plus faibles, un rapport molaire C/O du mélange du combustible et de l'oxydant étant compris entre 1 : 0,14 et 1 : 25, de manière que des préréactions exothermiques soient initiées sous forme d'une flamme froide ne provoquant qu'une conversion partielle du combustible et de l'oxydant, même pour un mélange homogène de combustible et d'oxydant, et où,

(b) par réglage d'un temps de séjour $t_v$, techniquement pertinent, du mélange fabriqué à l'étape (a) dans l'enceinte de réaction tel que $t_v >$ 25 ms à $p \leq 1$ bar, et de temps de séjour plus courts en cas d'augmentation de la pression, les autres conditions étant par ailleurs identiques, et par réglage d'une évacuation limitée de chaleur de la zone de réaction, un rapport entre le flux de capacité thermique de l'oxydant dans la zone de réaction $\dot{M} \cdot c_p$ et un produit du débit massique de combustible $\dot{M}_b$ et du pouvoir calorifique $H_u$, qui est de $\dot{M} \cdot c_p / \dot{M}_b \cdot H_u > 2 \times 10^{-4}$ $K^{-1}$ dans une enceinte de réaction adiabatique et/ou par l'intermédiaire de la paroi du réacteur avec une densité de flux thermique $\dot{q}$ de $\dot{q} < 85$ kW/m$^2$, on provoque un blocage cinétique de la poursuite de la réaction du mélange oxydable produit avec la flamme froide, tout auto-allumage de ce mélange, en particulier pendant un temps prédictible, étant ainsi évité.

2. Procédé selon la revendication 1, dans lequel, à titre de combustible, on utilise principalement des hydrocarbures, des mélanges d'hydrocarbures avec des produits non formés d'hydrocarbures, sous la forme d'émulsions et/ou de suspensions avec des liquides sensiblement insolubles dans l'hydrocarbure, en particulier d'eau, en mélange avec de l'ammoniaque, de l'acide sulfurique et/ou des alcanols.

3. Procédé selon la revendication 2, l'oxydant étant l'oxygène, l'ozone, l'air, des gaz d'échappement provenant d'une combustion sur-stoechiométrique, une combinaison contenant de l'oxygène, telle qu'une combinaison contenant du peroxyde, de l'oxyde de soufre, de l'oxyde d'azote ($N_yO$ ou $NO_x$).

4. Procédé selon au moins l'une des revendications 1 à 3, où, par refroidissement, on obtient une brumisation, au moins partielle, du produit selon la revendication 1(b).

5. Procédé selon au moins l'une des revendications 1 à 4, le mélange issu de l'étape (b) de la revendication 1 étant recyclé, au moins partiellement, dans un système de l'étape (a) de la revendication 1.

6. Procédé selon au moins l'une des revendications 1 à 5, la température de démarrage des préréactions exothermiques étant abaissée par diminution de pression du mélange formé d'oxydant et de combustible, par recirculation d'au moins une partie du mélange de l'étape (b) de la revendication 1 et/ou par addition d'un catalyseur.

7. Procédé selon la revendication 6, l'énergie nécessaire au lancement des réactions de l'étape (a) de la revendication 1 étant obtenue à partir de la préréaction exothermique de l'étape (a) de la revendication 1 et/ou par couplage avec de l'énergie issue d'un processus subséquent.

8. Procédé selon au moins l'une des revendications 1 à 7, le mélange de l'étape (b) de la revendication 1 étant condensé dans une plage de températures plus basse que celle correspondant à la plage d'ébullition initiale du combustible.

9. Procédé selon au moins l'une des revendications 1 à 8, pour la préparation et/ou la valorisation de combustibles, en particulier dans des raffineries, la fabrication de gaz de synthèse, la fabrication de gaz protecteurs, pour la préparation de combustible gazeux pour des piles à combustible, pour la combustion dans des moteurs à combustion interne et/ou des installations d'incinération, pour la séparation d'impuretés d'accompagnement de flux de matières.

10. Procédé selon au moins l'une des revendications 1 à 9, pour l'entraînement de propulsion de dispositifs mobiles, tels que des véhicules.

11. Procédé selon au moins l'une des revendications 1 à 9, pour utilisation dans des dispositifs fixes, tels que des dispositifs pour la production de force et d'électricité et/ou pour la fourniture de chaleur.

12. Procédé selon la revendication 9, dans lequel on utilise, à titre d'oxydant, de préférence de l'air et/ou de l'oxygène, les éduits issus de l'étape (a) de la revendication 1 étant amenés, en une proportion sous-stoechiométrique, de préférence avec un coefficient d'air de $\lambda = 0{,}2$ à $0{,}7$.

13. Procédé selon au moins l'une des revendications 1 à 12, un flux de matière supplémentaire, correspondant au combustible défini à la revendication 2 ou également à des matières qui ne sont pas des hydrocarbures, en particulier à des matières qui contiennent de l'hydrogène, étant introduit dans le mélange de l'étape (b) de la revendication 1,

14. Procédé selon la revendication 9, le produit issu de l'étape (b) de la revendication 1 étant transformé par des étapes de procédé techniquement connues, de préférence l'oxydation partielle, le reformage à la vapeur et/ou la réaction de gaz shift (réaction de gaz à l'eau), en un gaz combustible convenant pour des piles à combustible, tel que par exemple de l'hydrogène, du monoxyde de carbone et/ou des hydrocarbures à chaîne courte.

15. Procédé selon la revendication 9 et/ou 14, la pile à combustible étant une pile à combustible à membrane (PEMFC).

16. Procédé selon au moins l'une des revendications 1 à 15, le mélange issu de l'étape (b) de la revendication 1 étant soumis au moins partiellement à une augmentation de pression.

17. Procédé selon au moins l'une des revendications 1 à 16, le mélange de l'étape (b) de la revendication 1 étant soumis au moins partiellement à un processus de séparation, de préférence à un processus de séparation thermique.

Fig. 1 Abhängigkeit der Zündtemperatur von der Kohlenstoffkettenlänge (Zabetakis et al., 1954)

Fig. 2 Schematischer Temperaturverlauf bei einer Radikalkettenexplosion (Warnatz et al., 1993)

**Fig. 3**: Bereiche der Reaktionen bei der Zerstäubung von Brennstoff in einen heißen Luftstrom (HEIZÖL EL, $p$ = 1bar, $\lambda$ = 1)

**Fig. 4** Temperaturverlauf der Kalten Flamme entlang des Strömungswegs in Abhängigkeit der Betriebstemperatur (HEIZÖL EL, $p$ = 1bar, $\lambda$ = 1, $t_v$ = 0.9s)

**Fig. 5**: Bereiche für Startbedingungen der kalten Flamme in Abhängigkeit des Luftverhältnisses (Heizöl EL, $p = 1$bar, $t_v = 1$s)

**Fig. 6** Darstellung der Zündverzugszeit von Heizöl EL in Abhängigkeit von der Lufttemperatur und der Aufenthaltszeit (Druck $p = 1$ bar)

Fig. 7 Start- und Endtemperaturen der Kalten Flamme für unterschiedliche Brennstoffe ($p$ = 1 bar)

Fig. 8

Fig. 9 a)

Fig. 9 b)

Fig. 9 c)

Fig. 10

Fig. 11

Fig. 12

Fig. 13

Fig. 14

Fig. 15

Fig. 16

Fig. 17

6  9  21 22 23 24

1

2

7  4  5

Fig. 18

1

26

10  25

2

27

Fig. 19

Fig. 20